(19)

 Europäisches
 Patentamt
 European
 Patent Office
 Office européen
 des brevets

(11) **EP 4 537 978 A1**

(12) **EUROPEAN PATENT APPLICATION**
published in accordance with Art. 153(4) EPC

(43) Date of publication:
   **16.04.2025 Bulletin 2025/16**

(21) Application number: **23822977.7**

(22) Date of filing: **06.06.2023**

(51) International Patent Classification (IPC):
   ***B24B 1/00*** (2006.01)   ***B24B 31/116*** (2006.01)
   ***B24C 11/00*** (2006.01)   ***B24B 31/14*** (2006.01)

(52) Cooperative Patent Classification (CPC):
   Y02P 10/25

(86) International application number:
   **PCT/CN2023/098660**

(87) International publication number:
   **WO 2023/241408 (21.12.2023 Gazette 2023/51)**

(84) Designated Contracting States:
   **AL AT BE BG CH CY CZ DE DK EE ES FI FR GB
   GR HR HU IE IS IT LI LT LU LV MC ME MK MT NL
   NO PL PT RO RS SE SI SK SM TR**
   Designated Extension States:
   **BA**
   Designated Validation States:
   **KH MA MD TN**

(30) Priority: **13.06.2022  CN 202210659821**

(71) Applicants:
   • **AECC Shanghai Commercial Aircraft Engine
    Manufacturing Co., Ltd.
    Shanghai 201306 (CN)**
   • **Shaanxi JXTT.Material Technology Co., Ltd.
    Xi'an, Shaanxi 710086 (CN)**

(72) Inventors:
   • **LEI, Liming
    Shanghai 201306 (CN)**

   • **MI, Tianjian
    Shanghai 201306 (CN)**
   • **WANG, Xiaokang
    Shanghai 201306 (CN)**
   • **FAN, Linna
    Shanghai 201306 (CN)**
   • **ZHOU, Xinmin
    Shanghai 201306 (CN)**
   • **WANG, Wei
    Shanghai 201306 (CN)**
   • **GAO, Junshuai
    Shanghai 201306 (CN)**

(74) Representative: **Marchioro, Paolo
   Studio Bonini S.r.l.
   Corso Fogazzaro, 8
   36100 Vicenza (IT)**

(54) **SURFACE FINISHING METHOD FOR MICRO INTERNAL FLOW CHANNEL, MICRO INTERNAL FLOW CHANNEL WORKPIECE, AND FINISHING MEDIUM**

(57)    A surface finishing method for a micro internal flow channel, a micro internal flow channel workpiece, and a finishing medium. The bore of the micro internal flow channel is less than or equal to 3mm, and the length-to-diameter ratio of the micro internal flow channel is greater than or equal to 50:1. The finishing method comprises: a liquid-solid two-phase flow finishing medium is used, the liquid phase viscosity of the finishing medium is less than 1000cP, and the solid phase of the finishing medium is abrasive grains (1); and a predetermined pressure is applied to the finishing medium, so that the finishing medium flows in the micro internal flow channel at a flow rate of greater than 5m/s, and the flow of the finishing medium flowing into the micro internal flow channel from one end of the micro internal flow channel reaches a saturation value of flow allowed by the bore of the micro internal flow channel, so that the hydraulic pressure inside the internal flow channel is in a pressure building state. The surface finishing method for a micro internal flow channel can achieve targeted machining of bumps on a rough surface, is not limited by the material of the micro internal flow channel, and obtains a super mirror quality in which an optimal surface roughness range is consistent with an abrasive grain average edge contact length range.

**(Cont. next page)**

a polishing medium comprising a liquid phase and a solid phase, and viscosity of the liquid phase < 1000cP, the solid phase comprises abrasive particles

a predetermined pressure being set on the polishing medium, making the polishing medium flow in the micro inner flow channel at a flow velocity more than 5m/s, and flow rate of the polish polishing medium flowing into the micro inner flow channel at one end reaches a saturation flow rate allowed by the bore of the micro inner flow channel, making the hydraulic pressure inside the inner flow channel be in a pressure holding state

FIG. 1

**Description**

<u>Field</u>

The present disclosure relates to the field of precision processing, in particular to a surface polishing method for micro inner flow channel, a micro inner flow channel part and a polishing medium.

<u>Background</u>

Parts with micro inner flow channel structure have a wide range of disclosures in aerospace, shipbuilding, nuclear, automobile, mold and other industrial fields, especially the parts related to fluid power systems often have complex internal cavity structures such as micro flow channels, deep micro holes and micro flow channels communicating with deep micro holes, etc., which play the functions of transporting, exchanging or applying hydraulic pressure to fluids, such as fuel nozzles, heat exchangers, hydraulic components, oil circuit control throttles, etc.

Process technologies that can process micro inner flow channels include precision machining, femtosecond/-water-conduction/long-pulse laser processing, EDM and additive manufacturing (3D printing). In addition to additive manufacturing technology, the structure of the micro inner flow channel processed by other single processes is relatively simple, and the length and diameter are relatively small, and the micro inner flow channel can be processed only in combination with other combined processes such as welding. Micro inner flow channels by precision machining can cause problems such as burrs, inflection points, sharp corners, or tool transfer steps; Femtosecond laser-machined micro inner flow channel surfaces produce adhered residue particles and a surface "step" effect. Remelt layers will be generated on the surface of the micro inner flow channel of water-conduction/long-pulse lasers and EDM. Additive manufacturing (3D printing) is a technology that discretizes the model of complex three-dimensional structural parts into two-dimensional structures for layer-by-layer superimposition, which makes it possible to integrally form complex micro inner flow channel parts, so it is increasingly used in aerospace, automotive, mold and other industrial fields. However, due to the temperature gradient and layer-by-layer molding characteristics of additive manufacturing technology in the manufacturing process, there are semi-sintered or bonded powder particles on the surface of the inner flow channel of the part and the surface "step" effect.

Machining burrs, femtosecond laser processing of inner flow channel adhesion of sintered particles, additive manufacturing of inner flow channel surface bonding powder, etc., will affect the performance and safety of parts: when the fluid entering the inner flow channel and the surface layer friction at high speed causes burrs, adhesion residue particles or binder powder to fall off, it will become excess and spread everywhere with the fluid, or block the fuel/oil circuit or cause mechanical wear failure, resulting in major safety accidents. The internal surface with large roughness is easy to become a source of fatigue cracks in the process of long-term use, and it is easy to lead to carbon deposition if it is a high-temperature oil circuit system. The cutting lines, sharp corners of the inflection point or the connecting step on the surface of the machined flow channel, and the "step" phenomenon on the surface of the flow channel in femtosecond laser and additive manufacturing processing will lead to turbulence, eddy currents and a sharp increase in the resistance along the fluid during the fluid movement, and even cause the fluid to run out of control, produce vibration and reduce the service life of the parts. The rough surface will also cause a large number of cavitation bubbles to be generated in the fluid, affecting combustion and hydraulic force, and even cavitation corrosion. For some parts of specific materials (such as hollow blades) in the inner flow channel and connecting holes, the surface of the remelt layer is prone to microcracks, resulting in premature failure of the parts, so it is required to reduce the thickness of the remelt layer or not allow the remelt layer.

Therefore, when processing the inner flow channel surface of fluid dynamic parts through precision machining, femtosecond/water-conduction/long-pulse laser processing, EDM, additive manufacturing (3D printing) and other technologies, it will bring unfavorable problems such as burrs, residues such as binder powder and sintered particles, surface roughness and remelt layer, etc., and it is necessary to use appropriate surface polishing technology to eliminate these adverse effects in order to meet the performance requirements of the product.

However, at present, the technology that can effectively polish the surface of the micro complex inner flow channel has not yet developed, so that at present, for the micro complex inner flow channel workpiece by additive manufacturing, the roughness of the internal surface generally only has the original average roughness $Ra \geq 6.3 \mu m$ after additive manufacturing, and the product by additive manufacturing with the optimal surface roughness $Ra$ of the inner flow channel is less than or equal to $1.6 \mu m$ does not exist. And for the laser processing and EDM machining, the product with the optimal surface roughness $Ra$ of the inner flow channel is less than or equal to $0.8 \mu m$ does not exist. And for the machined processing, the product with the optimal surface roughness $Ra$ of the inner flow channel is less than or equal to $0.4 \mu m$ does not exist. And if the current micro complex inner flow channel has micro complex channels with special shape such as S-shaped bend, L-shaped bend, U-shaped bend, O-shaped bend, etc., it cannot be realized by machining which can only carry out linear cutting, but can only be realized by additive manufacturing and other methods, so there is no product with the optimal surface roughness $Ra$ of less than or equal to $1.6 \mu m$ for the surface of the micro complex inner flow channel with special shape by additive manufacturing.

Summary

One object of the present disclosure is to provide a surface polishing method for micro inner flow channel, a micro inner flow channel part and a polishing medium.

Firstly, the disclosure provides a surface polishing method for a micro inner flow channel, the diameter of the micro inner flow channel is less than or equal to 3mm and length-diameter ratio is greater than or equal to 50:1, and the polishing method includes following steps: a polishing medium including a liquid phase and a solid phase, and viscosity of the liquid phase <1000cP, the solid phase comprises abrasive particles; a predetermined pressure being set on the polishing medium, making the polishing medium flow in the micro inner flow channel at a flow velocity more than 5m/s, and flow rate of the polishing medium flowing into the micro inner flow channel at one end reaches a saturation flow rate allowed by the bore of the micro inner flow channel, making the hydraulic pressure inside the inner flow channel be in a pressure holding state.

In the embodiments of the present disclosure, by using a two-phase flow polishing medium with a viscosity of less than 1000cP liquid phase, the flow velocity of the two-phase flow polishing medium in the micro inner flow channel is >5m/s, and flow rate of the polishing medium flowing into the micro inner flow channel at one end reaches a saturation flow value allowed by the bore of the micro inner flow channel, making the hydraulic pressure inside the inner flow channel be in a pressure holding state, that is, through the synergistic effect of the liquid phase of low viscosity, the flow velocity of the polishing medium and the saturation flow rate, problems of the polishing processing of the micro inner flow channel are solved. The principle is that, firstly, due to the synergistic effect of the low viscosity liquid phase, the flow velocity of the polishing medium and the saturation flow rate, the polishing medium can smoothly enter the complex micro inner flow channel and form a state similar to that of a non-Newtonian fluid in the complex micro inner flow channel, and the fluid boundary layer is parallel to the surface of the inner flow channel, and the abrasive shear friction in the hard non-Newtonian fluid is like a "cutter-like" to achieve surface bump targeted processing. In addition, the synergistic effect of the above three features makes the friction micro-cutting force generated between the surface of the flow velocity of the polishing medium and the saturation flow rate and abrasive particles of the polishing medium, so that the optimal roughness of the surface can be obtained without the material limitation of the complex micro inner flow channel, but equal to the average contact length range of the abrasive particles tip, and even can be obtained a ultra-mirror quality of the optimal surface roughness.

In some embodiments, the liquid phase of the polishing medium is a water-based liquid.

In some embodiments, the abrasive particle has a surface sharp angle structure, the average cutting depth of the abrasive particle tip is 1.4nm~14nm, and the average contact length of the abrasive particle tip is 50nm~1000nm.

In some embodiments, the polishing medium polish the micro inner flow channel in a standard time period until the optimal surface roughness of the micro inner flow channel reaches a target value, and the standard time period is obtained through the following steps: the polishing medium polishes the micro inner flow channel in an initial time period, detects the optimal surface roughness of the micro inner flow channel, and if the optimal surface roughness reaches the target value, the initial time period is the standard time period; if the optimal surface roughness does not reach the target value, a stepping time period is increased successively until the optimal surface roughness reaches the target value, and the corresponding total time period is the standard time period; wherein, the initial time period and the stepping time period are obtained according to the unilateral thinning rate corresponding to the abrasive particles and the initial average surface roughness of the micro inner flow channel. In some embodiments, the predetermined pressure P satisfies the following formula:

$$Ra = Ra_0 - [\frac{1}{12}L\pi d^3 \left(\frac{\rho_p}{\rho_l}\right)^{\frac{4}{3}} \cdot \frac{Re \cdot D^2 \cdot \chi \cdot P}{32l^2 \cdot \sigma_w} - \frac{b^2}{4d}] \cdot (1-k) \cdot \frac{t}{2}$$

among them, $Ra_0$ is the initial average surface roughness of the micro inner flow channel, Ra is the target value of the optimal surface roughness of the micro inner flow channel after polishing, $t$ is the initial time period, $L$ is the average cutting depth of the abrasive cutting edge, $b$ is the average contact length of the abrasive cutting tip, $\rho_l$ is the water-based liquid phase density, $\rho_p$ is the abrasive solid phase density, $\sigma_w$ is the yield limit of the workpiece material, $\chi$ is the pressurization ratio to reach the saturation flow, Re is the Reynolds number of the liquid phase, $l$ is the length of the micro inner flow channel, $D$ is the diameter of the micro inner flow channel, $d$ is the abrasive particle size, $k$ is the concave-convex grinding ratio coefficient.

In some embodiments, the method further includes: after the surface roughness of the micro inner flow channel reaches the target value, a cleaning medium is injected into the micro inner flow channel with the predetermined pressure, and the cleaning medium and the liquid phase of the polishing medium dissolve each other, until a Tyndall effect appears on the cleaning medium flowing out of the micro inner flow channel.

In some embodiments, the method further includes: on the basis of a lower limit of viscosity of the liquid phase, abrasive particle size of the solid phase and abrasive mass concentration, the viscosity of the liquid phase of the polishing medium, the abrasive particle size of the solid phase and the mass concentration of the abrasive particles are gradually increased until the flow rate or flow velocity of the polishing medium of the two-phase flow is reduced by 1%~5% compared with the flow rate or flow velocity corresponding to the lower limit value, and an optimal value range of the viscosity, abrasive particle size and abrasive mass concentration is obtained.

In some embodiments, the polishing medium polishes the micro inner flow channel in a standard time period, the flow rate or flow velocity of the polishing medium in the micro inner flow channel is judged, and if the flow rate or flow velocity reaches the specified value, the optimal surface roughness reaches the target value.

In some embodiments, the micro inner flow channel includes an S-shaped bend, an L-shaped bend, a U-shaped bend, an O-shaped bend, and a spiral bend bending structure in a three-dimensional spatial direction, and the liquid phase of the polishing medium comprises a polymer tackifier.

Secondly, the disclosure provides a micro inner flow channel part, and the micro inner flow channel part is obtained by the polishing method as described in the above-mentioned embodiments.

In some embodiments, the micro inner flow channel part has a micro inner flow channel with a diameter less than or equal to 3mm, and a length-diameter ratio greater than or equal to 50:1, and the micro inner flow channel part is obtained through additive manufacturing, casting, laser processing, or electric spark machining, and the micro inner flow channel has an inner surface with an optimal surface roughness of $Ra$ less than or equal to 1.6$\mu$m after being polished.

In some embodiments, the micro inner flow channel part has a micro inner flow channel with a diameter of less than or equal to 3mm, and a length-diameter ratio of 50:1 is large, and the micro inner flow channel part is obtained through a precision machining, and the micro inner flow channel has an inner surface with an optimal surface roughness $Ra$ less than or equal to 0.4$\mu$m after being polished.

In some embodiments, the micro inner flow channel part is an additively manufactured aero-engine superalloy fuel nozzle, the fuel nozzle has the micro inner flow channel, the diameter of the micro inner flow channel is <2.5mm, the micro inner flow channel has a straight line, an L-shaped bend and an O-bend, and the surface optimal roughness Ra of the micro inner flow channel is less than or equal to 1.6$\mu$m; or the micro inner flow channel part is an additive manufactured aluminum alloy heat exchanger, the heat exchanger has a micro inner flow channel, the diameter is <3mm, and the micro inner flow channel has a straight line, an L-shaped bend, an S-shaped bend and a U-shaped bend, and the surface optimal roughness Ra of the micro inner flow channel is less than or equal to 1.6$\mu$m; or the micro inner flow channel part is an additive manufactured titanium alloy hydraulic assembly, the hydraulic assembly has a micro inner flow channel, the diameter is 3mm, and the micro inner flow channel has a straight line, an S-shaped bend, an L-shaped bend, and the surface optimal roughness Ra of the micro inner flow channel is less than or equal to 3.2$\mu$m; or the micro inner flow channel part is an additive manufactured stainless steel throttle the throttle has a micro inner flow channel, the diameter is <1mm, the micro inner flow channel has a spiral bend, and the surface optimal roughness Ra of the micro inner flow channel is less than or equal to 0.8$\mu$m.

In some embodiments, the micro inner flow channel part is an aero-engine casting superalloy hollow blade, the hollow blade has an inner cavity structure that the micro inner flow channel is connected with a small hole, and the optimal roughness $Ra$ of the inner surface of the small hole after polishing is less than or equal to 0.8$\mu$m, there is no remelt layer, and the chamfer radius of the hole is greater than 0.1mm.

Thirdly, the disclosure provides a polishing medium, and the polishing medium being used for claim 1, the polishing medium comprising a liquid phase and a solid phase, and the viscosity of the liquid phase <1000cP, the solid phase comprising an abrasive particle; and the liquid phase of the polishing medium is added with polymer tackifier; steps for obtaining the polishing medium includes: on the basis of a lower limit of viscosity of the liquid phase, abrasive particle size of the solid phase and abrasive mass concentration, the viscosity of the liquid phase of the polishing medium, the abrasive particle size of the solid phase and the mass concentration of the abrasive particles are gradually increased until the flow rate or flow velocity of the polishing medium of the two-phase flow is reduced by 1%~5% compared with the flow rate or flow velocity corresponding to the lower limit value, and an optimal value range of the viscosity, abrasive particle size and abrasive mass concentration is obtained.

In some embodiments, a defoamer is added to the liquid phase, and in the process of processing the inner flow channel by the polishing method, the volume ratio of the surface foaming slurry of the polishing medium to the volume of the liquid phase does not exceed 0.3:1.

In some embodiments, a lubricant is added to the liquid phase of the polishing medium, and the lubricant comprises one or more combinations of inorganic compounds, elemental substances, and polymer compounds.

Description of attached drawings

The above and other features, properties and advantages of the present disclosure will be made more apparent by the following descriptions in conjunction with the drawings and embodiments, it should be noted that the drawings are only examples, they are not drawn according to the conditions of equal proportions, and should not be used as a limitation on the scope of protection actually claimed by the present disclosure, where:

FIG. 1 is a schematic flow chart of a polishing method according to some embodiments of the present disclosure.

FIG. 2 is a schematic diagram of the principle of micro-cutting force of the polishing method according to some embodiments of the present disclosure.

FIG. 3 is a schematic flow chart of a polishing method according to another some embodiments of the present disclosure.

FIG. 4 is a schematic flow chart of a polishing method according to another some embodiments of the present disclosure.

FIG. 5 is a schematic flow chart of a polishing method according to another some embodiments of the present disclosure.

FIG. 6A to FIG. 6C are pictures of parts polished according to the polishing method of a first embodiment of the present disclosure.

FIG. 7A to FIG. 7C are pictures of parts polished according to the polishing method of a second embodiment of the present disclosure.

FIG. 8A to FIG. 8C are pictures of parts polished according to the polishing method of a third embodiment of the present disclosure.

FIG. 9A and FIG. 9B are pictures of parts polished according to the polishing method of a fourth embodiment of the present disclosure.

FIG. 10A and FIG. 10B are pictures of parts polished according to the polishing method of a fifth embodiment of the present disclosure.

FIG. 11A and FIG. 11B are pictures of parts polished according to the polishing method of a sixth embodiment of the present disclosure.

FIG. 12A and FIG. 12B are pictures of parts polished according to a polishing method of a comparative solution corresponding to the polishing method of the second embodiment of the present disclosure.

FIG. 13 is a schematic diagram of a bending structure of the micro inner flow channel.

Detailed Description of Embodiments

The following discloses embodiments of the subject technical solutions described. For the sake of simplification of disclosure, specific examples of each element and arrangement are described below, of course, these are only examples and do not limit the scope of protection of the present disclosure. "One embodiment", "an embodiment", and/or "some embodiments" refer to a feature, structure or characteristic related to at least one embodiment of the present disclosure. Therefore, it should be emphasized and noted that "an embodiment" or "one embodiment" or "one or more embodiments" mentioned twice or more in different positions in this specification do not necessarily refer to the same embodiment. In addition, some features, structures or characteristics in one or more embodiments of the present disclosure may be appropriately combined.

A flowchart is used in the present disclosure to illustrate the operation performed by the system according to an embodiment of the present disclosure. It should be understood that the preceding or following operations are not necessarily performed accurately in order. Other operations can also be added into these processes, alternatively, one or more steps of operations can also be removed from these processes.

In addition, the average roughness described below, that is, the average roughness of the measured surface is obtained by selecting a plurality of areas on the measured surface and taking an average of the measured surface. The optimal roughness described below is that a plurality of areas selected on the measured surface for measurement and the minimum value is taken to obtain the optimal roughness of the measured surface. For example, when performing roughness measurement, for example, a certain area of roughness measurement can be a pipe section with a length of 8mm, and multiple pipe sections with a length of 8mm can be selected to measure and take the minimum value in the measured pipeline.

Parts with micro and complex inner flow channel structures have a wide range of disclosures in aerospace, shipbuilding, nuclear, automobile, mold and other industrial fields, however, the current processing technology, such as precision machining, femtosecond/water-conduction/long-pulse laser processing, EDM, additive manufacturing (3D printing) and other technologies when processing the inner flow channel surface of fluid power parts, will bring unfavorable problems such as burrs, residues such as binder powder and sintered particles, rough surfaces and remelt layers. These negative effects need to be eliminated with the proper surface polishing technology to meet the performance requirements of the product.

At present, the product by additive manufacturing with the optimal surface roughness $Ra$ of the inner flow channel is less than or equal to 1.6µm does not exist. And for the laser processing and EDM machining, the product with the optimal surface roughness *Ra* of the inner flow channel is less than or equal to 0.8µm does not exist. And for the machined processing, the product with the optimal surface roughness *Ra* of the inner flow channel is less than or equal to 0.4µm does not exist. And if the current micro complex inner flow channel has micro complex channels with special shape such as S-shaped bend, L-shaped bend, U-shaped bend, O-shaped bend, etc., it cannot be realized by machining which can only carry out linear cutting, but can only be realized by additive manufacturing and other methods, so there is no product with the optimal surface roughness *Ra* of less than or equal to 1.6µm for the surface of the micro complex inner flow channel with special shape by additive manufacturing.

After in-depth research, the inventors tried and compared a variety of surface polishing methods for the inner flow channel, and found that when the diameter of the inner flow channel of the part is large (>3mm), the length-diameter ratio is relatively small (<50:1), and the extending direction is approximately straight, common methods such as manual grinding, chemistry, electrochemistry, plasma, magnetism, magneto-rheology, abrasive flow, water jet and ultrasonic can be used for polishing, however, for the inner flow channel with a small diameter (less than or equal to 3mm) and a big length-diameter ratio (greater than or equal to 50: 1):

(1) Using abrasive flow technology, using the semi-solid soft paste polishing medium with greater rigidity to the internal cavity through the extrusion grinding mechanism, the inventors found that the creep fluid in the very small state of the Reynolds number is difficult to achieve uniform processing through the complex long-range micro-micro flow channel, and is easy to be blocked in the bend and dead angle, and if a forced pass will cause the flow channel to deform and even crack the flow channel. Even when the polishing medium barely passed through the flow channel with a length-diameter ratio ≥50:1, the pressure and flow velocity will decay sharply as the length of flow path increases, resulting in the inner flow channel port being "over-polished" and the interior being "unpolished" due to excessive pressure and flow rate loss. In addition, the colloidal abrasive flow medium that is insoluble in water is easy to remain in the bends and dead corners of the inner flow channel, and it is difficult or even impossible to be completely removed after the completion of processing.
(2) Using abrasive water jet technology, also known as micro abrasive slurry jet, high-speed flow and high-speed water particle polishing, by applying liquid pressure to the water jet nozzle, using the nozzle to spray out a water jet with abrasive particles to impact kinetic energy erosion to remove the surface material of the workpiece, the water jet nozzle and the surface of the part keep a short distance, so it is difficult for the abrasive water jet technology to act on the micro inner flow channel with a small diameter (less than or equal to 3mm) and a relatively large length diameter (greater than or equal to 50:1) of the inner flow channel;
(3) Using magnetic polishing technology, it can only do slight polishing processing on the surface of the inner flow channel with a diameter of >3mm and with a nearly straight extension, but cannot effectively surface polish the surface of the inner flow channel containing S-shaped bend, L-shaped bend, U-shaped bend, O-bend and spiral bend with a diameter less than or equal to 3mm and a with three-dimensional spatial direction. The reason is that magnetic polishing is a kind of flexible processing using a larger size magnetic needle abrasive particle, and its principle is that the surface bump and concave point will be processed at the same time under the action of the external magnetic field. Therefore, these flexible processing methods can only improve the surface with slight polishing, and even if the amount of material removed is large, it cannot significantly improve the "step" effect of the surface, reduce the surface roughness, and remove the powder, particles and burrs adhered to the surface on a large scale. In addition, this method cannot cope with the complex inner flow channel polishing with three-dimensional spatial direction on the part due to the controlled magnetic field motion.
(4) Using the chemical polishing method, when the diameter of the inner flow channel is very small and the corrosion solution that can be accommodated is less, the efficiency of the chemical polishing method will be extremely low and even the reaction bubble will occur locally and block the solution flow, causing the workpiece cannot be polished;
(5) Using electrochemical, plasma shaping and ultrasonic methods, it is difficult to place profiling electrodes in narrow three-dimensional flow channels containing S-bend, L-bend, U-bend, O-bend, spiral bend, etc., so that it is hard to polish the complex micro inner flow channel.

In addition, for (4) and (5), chemical, electrochemical, plasma polishing and other methods will also produce a variety of corrosion and metamorphic layer defects on the microstructure of the flow channel matrix material, and the corrosive liquid and reaction gas will also have negative effects on the environment and device; At the same time, (4) and (5) are also flexible processing methods, which will also face similar shortcomings of (3), which can only make slight polishing improvement on the surface, and even if the amount of material removed is large, it cannot significantly improve the "step" effect of the surface, reduce the surface roughness and peel off the powder, particles and burrs adhered to the surface on a large scale. To sum up, the inventors has found that the above-mentioned processing methods will face the problems that it is difficult to flow deeply into the micro inner flow channel to do polishing work and/or the unsatisfactory quality of the polishing for the structure of the micro inner flow channel, so it is difficult to apply to the polishing processing of the micro inner flow channel. Based on the above, the inventors further did in-depth research and invented a surface polishing method for the micro inner flow channel, by using a two-phase flow polishing medium with a viscosity of less than 1000cP liquid phase, the flow velocity of the two-phase flow polishing medium in the micro inner flow channel is >5m/s, and flow rate of the polishing medium flowing into the micro inner flow channel at one end reaches a saturation flow value allowed by the bore of the micro inner flow channel, making the hydraulic pressure inside the inner flow channel be in a pressure holding state, that is, through the synergistic effect of the liquid phase of low viscosity, the flow velocity of the polishing medium and the saturation flow rate, problems of the polishing processing of the micro inner flow channel are solved. The principle is that, firstly, due to the synergistic effect of the low viscosity liquid phase, the flow velocity of the polishing medium and the saturation flow rate, the polishing medium can smoothly enter the complex micro inner flow channel and form a state similar to that of a non-Newtonian fluid in the complex micro inner flow channel, and the fluid boundary layer is parallel to the surface of the inner flow channel, and the abrasive shear friction in the hard non-Newtonian fluid is like a "cutter-like" to achieve surface bump targeted processing. In addition, the synergistic effect of the above three features makes the friction micro-cutting force generated between the surface of the flow velocity of the polishing medium and the saturation flow rate and abrasive particles of the polishing medium, so that the optimal roughness of the surface can be obtained without the material limitation of the complex micro inner flow channel, but equal to the average contact length range of the abrasive particles tip, and even can be obtained a ultra-mirror quality of the optimal surface roughness $Ra$ 0.05$\mu$m, which breaks through the limitation of the principle of abrasive flow and water jet technology, and the principle is that the cutting mechanism of abrasive flow technology is the volume force generated by the surface of abrasive extrusion. Therefore, the processing of metal and polymer flexible materials with low hardness is prone to pits and pitting ($Ra$>0.8$\mu$m). In abrasive waterjet technology, the cutting force is the erosion force generated by the impact of the abrasive particles on the surface, and the processing of soft metal is easy to roughen the surface ($Ra$>0.8$\mu$m).

It can be understood that the polishing method disclosed in the embodiments of the present disclosure solves the problems that when the diameter of the inner flow channel is small (less than or equal to 3mm), and the length-diameter ratio is relatively large (greater than or equal to 50:1) the channel cannot be effectively processed. Thus, a micro inner flow channel part with an optimal surface roughness $Ra$ of less than or equal to 1.6$\mu$m is obtained. The part can have a complex micro inner flow channel with S-shaped bends, L-shaped bends, U-shaped bends, O-shaped bends, and spiral bends in a three-dimensional space, such as various engine fuel nozzles, heat exchangers, hydraulic components, and oil circuit control throttles for aviation/aerospace/ships/automobiles. In addition, it can be understood that the surface polishing method of the inner flow channel disclosed in the embodiment of the present application is not limited to parts with complex micro inner flow channels, but can also be used for the processing of inner flow channel parts of other sizes.

It should be explained that the terms "diameter" and "length" in the context mean the equivalent diameter as well as the equivalent length, and the length-diameter ratio is the ratio of the equivalent length to the equivalent diameter. Equivalent diameter, the cross-sectional shape of the inner flow channel can be circular, elliptical, etc., and the cross-sectional profile is composed of closed curves (non-polygonal lines). The cross-sectional shape of the inner flow channel can also be rectangular, triangular, etc., and the cross-sectional profile is composed of closed polylines. The cross-sectional profile is composed of arbitrary closed curves (non-polylines) or closed polylines, and since the cross-sectional profile is an irregular shape, an equivalent diameter is introduced, which is defined as an ideal circle for any cross-sectional shape that is equal to the actual cross-sectional area of the arbitrary cross-sectional shape, and the diameter of this ideal circle is the equivalent aperture. The equivalent length refers to the total distance traveled by the fluid in the inner flow channel to actually flow between the two ports of the inner flow channel.

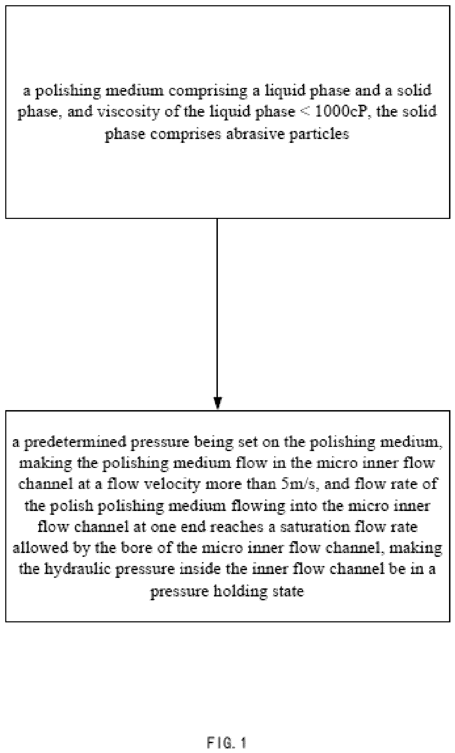

According to some embodiments, with reference to FIG. 1, the disclosure provides a surface polishing method for the inner flow channel, including:

a liquid-solid two-phase polishing medium is used, the viscosity of the liquid phase of the polishing medium is <1000cP, and the solid phase includes abrasive particles;
a predetermined pressure is applied to the polishing medium, making the polishing medium flow in the micro inner flow channel at a flow velocity more than 5m/s, and flow rate of the polishing medium flowing into the micro inner flow channel at one end reaches a saturation flow value allowed by the bore of the micro inner flow channel, making the hydraulic pressure inside the inner flow channel be in a pressure holding state.

The liquid here has the property of viscosity <1000cP, and the description of the viscosity value in this disclosure refers to the Ubbelohde viscosity at room temperature (about 25 degrees Celsius). The optimal value of the viscosity of the liquid phase corresponding to the polishing method for the micro inner flow channel of different materials, sizes, and initial average roughness can be obtained by increasing the viscosity on the basis of a lower limit. The lower limit of viscosity of the present embodiments is about 50cP, and the inventors obtained the lower limit through a large number of test data that for the micro-inner flow channel of common materials such as titanium alloy, high-temperature alloy, steel, ceramics, aluminum alloy, polymer materials, etc., the viscosity of the liquid phase needs to be at least 50cP, and the target value of roughness is reached after polishing. The critical value of 1000cP here is generally not the optimal value, but the limit value for the continuous, polish and stable flow of the polishing medium in the micro inner flow channel.

The liquid phase described in the embodiments, taking the water-based liquid phase as an example, adds a certain viscosity on the basis of deionized water to make the water-based liquid have a certain viscosity. The beneficial effect of using water-based liquids is that they are easy to obtain at a low cost, they are environmentally friendly, and the polishing medium can be easily cleaned after polishing. However, it can be understood that the liquid phase here is not limited to water-based liquids, as long as it is a liquid with a viscosity <1000cP.

The material of solid phase abrasive particles can be common abrasive materials, such as carbide ceramics: including silicon carbide, tungsten carbide, etc.; oxide ceramics: including alumina, zirconia, cerium oxide, etc.; Nitride ceramics: including boron nitride, chromium nitride, etc.; natural minerals: including diamond/sand, mica, quartz, olivine, etc. In some embodiments, it can be one or more combinations of diamond/sand and oxide ceramics.

When selecting the particle size and mass concentration of abrasive particles, the range of optimal values is generally gradually increased on the basis of a lower limit value. If the particle size and mass concentration of abrasive particles are lower than the lower limit value, the expected polishing effect cannot be achieved, that is, the micro inner flow channel cannot reach the target value of surface roughness, the principle is that if the particle size is too small, the mass of the abrasive particle itself is too low, and it is impossible to generate enough kinetic energy to achieve effective grinding and polishing, if the mass concentration is too small, the probability of grinding surface processing point is reduced and the effective grinding and polishing cannot be realized, and the selection of the lower limit value is generally conservative, for example, it can be conservatively selected any lower limit value under the premise of not exceeding the upper limit value of particle size. The lower limit of the ratio of the diameter of the inner flow channel to the particle size of the abrasive particle is usually 20, that is, the diameter of the inner flow channel should ensure that at least 20 abrasive particles pass through in parallel without blockage, that is, the upper limit of the particle size of the abrasive particle is usually 1/20 of the diameter of the inner flow channel, and the lower limit of the abrasive particle is generally 1/5 of the upper limit. The lower limit of the mass concentration of abrasive particles is generally 10g/L, and the selection of the lower limit is generally conservative, because the pressure of the system is large, and if the abrasive particles are blocked, it will lead to the scrapping of the workpiece and the system, and even cracking and explosion. Therefore, on the basis of the specified lower limit, the particle size and mass concentration of abrasive particles are gradually increased until the flow velocity and flow rate decrease are caused by significant flow resistance caused by the excessive size of abrasive particles or too high mass concentration, and the mutual collision between abrasive particles affects the flow rate and then reduces the flow rate and grinding effect, that is, the optimal value can be obtained by test on the basis of the lower limit value, and specific steps will be described in the embodiments below.

A predetermined pressure is applied to the polishing medium so that the polishing medium flows at a flow velocity of >5m/s in a micro inner flow channel. The predetermined pressure here refers to the use of the pressure in the initial state of the polishing process to make the polishing medium flow at a flow velocity of >5m/s inside the micro inner flow channel, with the progress of the polishing, the surface roughness of the inner flow channel decreases, and under the same pressure conditions, the flow velocity of the polishing medium in the micro inner flow channel will become faster and faster. **It** can be understood that since the flow velocity achieved is a range, the predetermined pressure here is a concept of a range, rather than only a specific value being applied to the polishing medium. Measurement of the flow velocity of the polishing medium inside the micro inner flow channel, which cannot be measured by immersion, otherwise the abrasive particles will damage any sensor probes. Ultrasonic velocimetry can be used, or the Hagen-Poiseuille's law of viscous fluids can be used:

$$u_m^2 = \frac{D^2}{32 \cdot \rho_l \cdot l / \text{Re}} \cdot \frac{p}{l}$$

to do indirect measurements; In the formula, where D is the diameter of the inner flow channel, $l$ is the length of the micro inner flow channel, $p$ is the pressure difference acting on the two ports of the micro inner flow channel, that is, the hydraulic pressure p, Re is the Reynolds number, $u_m$ is the flow velocity of the liquid phase in the water-based two-phase flow, $\rho_l$ is the density of the liquid phase, and the flow velocity of the liquid phase is roughly equivalent to the flow velocity of the polishing medium.

The flow velocity of the polishing medium is greater than 5m/s, according to the critical conditions for the formation of non-Newtonian fluids in theory and the critical values obtained by the inventor in long-term practice. Engineering fluid mechanics data show (e.g. library materials: Yang Shuren, Wang Zhiming, He Guangyu, et al. Engineering fluid mechanics[M]. Petroleum Industry Press, 2006.), the pure water viscosity 1cP reaches the critical motion flow velocity of the non-Newtonian fluid >16.6m/s, and the lower limit of the viscosity of the liquid phase in the present embodiment is 50cP, which is greater than 1cP, so the critical flow velocity of the non-Newtonian fluid is less than 16.6m/s. At the same time, combined with the practical results, the inventors found that the ideal processing effect could not be obtained when it was less than 5m/s, so the critical value here is 5m/s.

The polishing medium flows into flow channel at one port of the micro inner flow channel at a flow rate reaching a saturation flow rate allowed by the bore of the micro inner flow channel, making the hydraulic pressure inside the inner flow channel be in a pressure holding state, that is, the state of saturation flow rate called in the art.

The saturation flow value of the accommodating flow rate and the state of the saturated flow rate here are the maximum number of fluid molecules that fill the pipe section when the fluid flows into the pipe, and the pipe section holds the fluid molecules in parallel.

It can be understood that the beneficial effects of the polishing method of using the above embodiments include but not limit to:

By using a two-phase flow polishing medium with a viscosity of less than 1000cP liquid phase, the flow velocity of the two-phase flow polishing medium in the micro inner flow channel is >5m/s, and flow rate of the polishing medium flowing into the micro inner flow channel at one end reaches a saturation flow value allowed by the bore of the micro inner flow channel, making the hydraulic pressure inside the inner flow channel be in a pressure holding state, that is, through the synergistic effect of the liquid phase of low viscosity, the flow velocity of the polishing medium and the saturation flow rate, problems of the polishing processing of the micro inner flow channel are solved. The principle is that, firstly, due to the synergistic effect of the low viscosity liquid phase, the flow velocity of the polishing medium and the saturation flow rate, the polishing medium can smoothly enter the complex micro inner flow channel and form a state similar to that of a non-Newtonian fluid in the complex micro inner flow channel, and the fluid boundary layer is parallel to the surface of the inner flow channel, and the abrasive shear friction in the hard non-Newtonian fluid is like a "cutter-like" to achieve surface bump targeted processing. In addition, the synergistic effect of the above three features makes the friction micro-cutting force generated between the surface of the flow velocity of the polishing medium and the saturation flow rate and abrasive particles of the polishing medium, so that the optimal roughness of the surface can be obtained without the material limitation of the complex micro inner flow channel, but equal to the average contact length range of the abrasive particles tip, and even can be obtained a ultra-mirror quality of the optimal surface roughness $Ra$ 0.05$\mu$m, which breaks through the limitation of the principle of abrasive flow and water jet technology, and the principle is that the cutting mechanism of abrasive flow technology is the volume force generated by the surface of abrasive extrusion. Therefore, the processing of metal and polymer flexible materials with low hardness is prone to pits and pitting ($Ra$>0.8$\mu$m). In abrasive waterjet technology, the cutting force is the erosion force generated by the impact of the abrasive particles on the surface, and the processing of soft metal is easy to roughen the surface ($Ra$>0.8$\mu$m). In addition, the hydrodynamic conformal processing method of low viscosity and high flow velocity makes the surface steps, sharp corners, geometric contour curvature and other positions that do not conform to fluid engineering on the surface of the inner flow channel to be more heavily ground, and the inflection point, sharp edge, curvature and hole shape of the inner flow channel will realize geometric streamline shaping, and further improve the fluid motion performance of the inner flow channel. **In** addition, the above embodiments propose a critical flow velocity of 5m/s to realize the targeted processed of surface bumps by using the flow velocity of the polishing medium to achieve a hard non-Newtonian fluid similar to that of a cutter-like and abrasive shear friction.

As for the processing time of the polishing medium in the micro inner flow channel, it can be that the polishing medium is polished in the micro inner flow channel in a standard time period until the optimal surface roughness of the micro inner flow channel is the target value. The standard time period herein can be a predetermined continuous period of time, or a multi-period of intermittent time, or it can be a non-predetermined continuous period of time after the start, after the flow rate of the polishing medium is detected to reach the flow rate corresponding to the optimal surface roughness of the surface roughness of the micro inner flow channel, the polishing process is automatically stopped, for example, in some embodiments, after the processing started, the optimal surface roughness is indirectly characterized by measuring the flow rate or flow velocity of the polishing medium inside the micro inner flow channel, when the flow rate or flow velocity reaches a specified value, the corresponding optimal surface roughness reaches the target value, and the polishing process is stopped manually or automatically. The meaning of the optimal surface roughness here is not limited to a directly measured optimal surface roughness, but can also be indirectly characterized, such as the flow rate and flow velocity of the polishing medium in the micro inner flow channel as described above. The above target value refers to the predetermined surface optimal roughness value, which generally refers to the requirement for the final surface optimal roughness of the micro inner flow channel, but it is not excluded that further surface roughness will continue after the above polishing steps, and the predetermined surface optimal roughness value is not the final surface optimal roughness requirement.

To sum up, the polishing method introduced in the above embodiments solves the longstanding problem of micro inner flow channel with a diameter of less than or equal to 3mm and an length-diameter ratio greater than or equal to 50:1 by using the combination of low-viscosity and high-speed solid-liquid two-phase fluid, achieving the saturation flow rate of the inner flow channel to be processed, and the micro-cutting mechanism generated by the high-speed friction of abrasive particles on the surface of the inner flow channel in the two-phase flow.

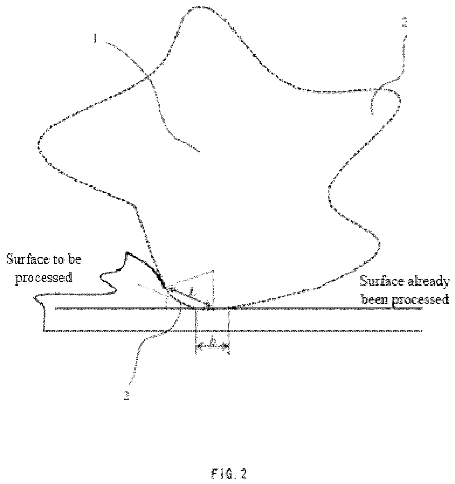

In some embodiments, referring to FIG. 2, the structure of the abrasive particle 1 of the two-phase polishing medium includes a surface sharp angle structure 2 to play the role of micro-cutting, and the structural parameters of the abrasive particle can be that the average cutting depth $L$ of the abrasive particle tip is 1.4nm~14nm, and the average contact length $b$ of the abrasive particle tip is 50nm~1000nm. It can be understood that because the particle size of a single abrasive particle is generally small, the abrasive particle generally undergoes local agglomeration in practice, and the abrasive particle structure model shown in FIG. 2 is not an atom or molecule of a single abrasive particle in the physical sense, but the equivalent abrasive particle group with local agglomeration. That is, the average cutting depth of the abrasive particle tip is the average cutting depth of the cutting edge of the equivalent abrasive particle group, and the average contact length of the abrasive cutting edge is the average contact length of the cutting edge of the equivalent abrasive particle group, and in addition, in order to clearly illustrate the average cutting depth $L$ of the abrasive particle tip and the average contact length $b$ of the abrasive cutting edge, FIG. 2 is not drawn in equal proportions. In addition, the average cutting depth $L$ of the abrasive cutting edge is 1.4nm~14nm, and the average contact length $b$ of the abrasive cutting edge tip is 50nm~1000nm, which is not directly observed by electron microscopy, but is statistically calculated according to the data obtained by the inventor's long-term practice. The inventor found that for the polishing method in the above embodiments, the unilateral thinning rate of the diameter of the inner flow channel is 5$\mu$m/h~50$\mu$m/h, and the corresponding unilateral thinning rate per second is 1.4nm/s~14nm/s, that is, the average cutting depth of the abrasive particle tip of the equivalent abrasive particle group touching the surface of the micro inner flow channel per second is 1.4nm/s~14nm/s, that is, the average cutting depth $L$ of the corresponding abrasive tip is 1.4nm~14nm. In this way, the polishing result is guaranteed, and the micro-cutting speed will not be too fast to cause over-polished, so as to meet the dimensional accuracy requirements of the polishing processing and avoid out-of-tolerance. The inventors also found that the optimal surface roughness $Ra$ that can be achieved by using the polishing method of the above embodiments is 0.05$\mu$m~1$\mu$m, and the average contact length of the abrasive cutting edge determines the final optimal roughness, so the average contact length of the corresponding abrasive cutting edge is 50nm~1000nm. Through a large number of tests, the structural parameters of the equivalent abrasive particle group can play an important role in the calculation of predetermined pressure and other parameters. The specific value of the average cutting depth of the abrasive cutting tip touching the surface of the micro inner flow channel per second is between 1.4nm~14nm, and the average contact length of the abrasive tip is 50nm~1000nm, which can be obtained according to the approximate correspondence of the specific particle size of the abrasive particles. If the abrasive particle size is large, the average cutting depth of the abrasive tip contacting the micro inner flow channel surface per second and the average contact length of the abrasive tip will be larger. The specific corresponding values can be obtained through long-term experimental data: the unilateral thinning rate corresponding to the abrasive particle size is the average cutting depth of the abrasive particle tip and the average contact length of the abrasive tip per second that contacts the surface of the fine inner flow channel, that is, the optimal roughness after being polished.

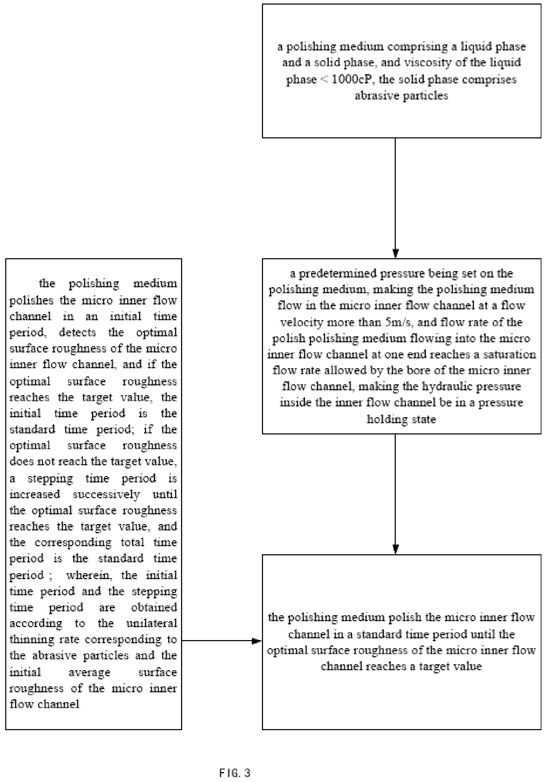

In other embodiments, referring to FIG. 3, the polishing medium polish the micro inner flow channel in a standard time period until the optimal surface roughness of the micro inner flow channel reaches a target value, and the standard time period is obtained through the following steps: the polishing medium polishes the micro inner flow channel in an initial time period, detects the optimal surface roughness of the micro inner flow channel, and if the optimal surface roughness reaches the target value, the initial time period is the standard time period; if the optimal surface roughness does not reach the target value, a stepping time period is increased successively until the optimal surface roughness reaches the target value, and the corresponding total time period is the standard time period; wherein, the initial time period and the stepping time period are obtained according to the unilateral thinning rate corresponding to the abrasive particles and the initial average surface roughness of the micro inner flow channel. The above initial time period is generally calculated based on the average surface roughness of the initial surface of the micro inner flow channel and the average cutting depth of the abrasive tip touching the surface of the micro inner flow channel per second. For example, the initial average surface roughness of the inner flow channel is $Ra$=10$\mu$m, the average height difference between the surface bump and the concave is about 10$\mu$m, and the average cutting depth of the abrasive cutting tip touching the surface of the micro inner flow channel per second is 1.4nm~14nm, that is, the unilateral thinning rate is 5$\mu$m/h~50$\mu$m/h, and the standard time period is at least 2h if it is estimated according to the lower limit of 5$\mu$m/h, so the initial time period is set to 2h. For example, if the tolerance is plus or minus 5$\mu$m, then according to the unilateral thinning rate of 5$\mu$m/h~50$\mu$m/h, the lower limit of 5$\mu$m/h is estimated, and the step time corresponds to 1h, so as to avoid excessive time stepping and resulting in size out-of-tolerance.

It can be understood that the above process can be obtained in the field test in the polishing process, that is, if it is necessary to determine the initial time period corresponding to a certain micro inner flow channel, according to the above method, the standard time period is obtained by carrying out the polishing of the initial time period and the stepping time period, and the micro inner flow channel polishing process is also completed while obtaining the standard time period. After that, when the micro inner flow channel is polished, the total processing time can be directly corresponded to the standard time period. There is no longer to do experiments to determine the initial time period and the step time period.

In some embodiments, the method of measuring the surface optimal roughness of the micro inner flow channel after the polishing medium in the initial time period can use a method for indirectly measuring the surface optimal roughness of the micro inner flow channel through the surface optimal roughness value corresponding to an enlarged value of a port, satisfying the following formula:

$$Ra^* = Ra_0 - \delta \cdot \frac{(1-k)}{8}$$

$Ra^*$ is the optimal surface roughness of the port diameter after the micro inner flow channel is polished, $Ra_0$ is the initial average surface roughness of the micro inner flow channel, $\delta$ is the enlarged value of the port, which is generally 0.01mm~0.5mm, and $k$ is the concave-convex grinding ratio coefficient, which is generally 0.2~0.4.

The concave and convex grinding ratio coefficient k here represents the proportion of the probability of the distribution of the abrasive particle in the valley to the position of the peak, which can be measured by the ratio of the grinding thinness in the valley and peak position. For machined tools, k≈0 because the tool is rigid body positioning and only point-oriented machining of peak. For the abrasive flow, both the peak and the valley will be touched and ground by the abrasive particles, so k≈0.6~0.8. Chemical/electrochemical/magnetic/ultrasonic plus abrasive and other flexible methods are isotropic processing for peaks and valleys, so k≈0.9~1, that is, even if the average surface thinning amount is large for a long time, the surface roughness cannot be significantly improved, and can only be brightened and leave an orange peel-like surface morphology. For the two-phase flow polishing method introduced in the above embodiments, because the non-Newtonian fluid has a high-speed shear motion of the rigid body tool on the surface, it has a higher directional grinding of the peaks, k≈0.2~0.4. If the actual diameter enlarged value is more than 90% of the target diameter enlarged value, it indicates that the optimal surface roughness $Ra^*$ corresponding to the diameter enlarged value reaches the target value, and the initial time period is the standard time period. If the target value is not met, the stepping time period is increased one by one until the optimal surface roughness reaches a target value.

The surface optimal roughness of the micro inner flow channel is indirectly measured by the surface optimal roughness corresponding to the diameter enlarged value, and the detection process is convenient and can be conducted on site.

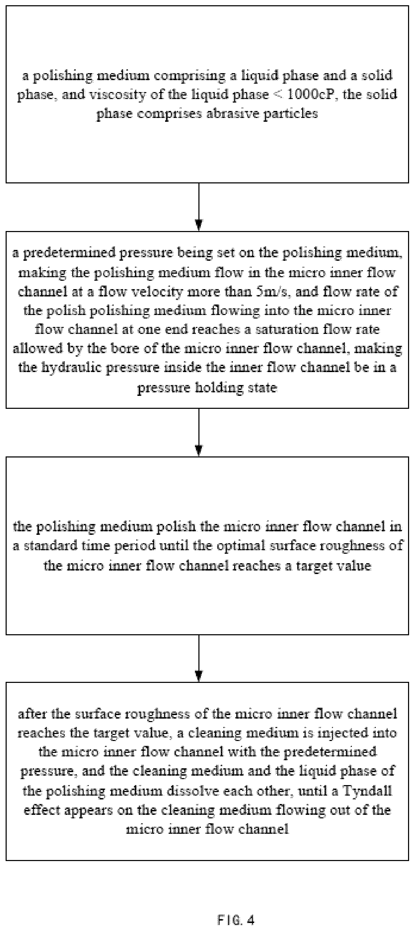

In some embodiments, referring to FIG. 4, the polishing method further includes, after the optimal surface roughness of the micro inner flow channel reaches the target value, the polished micro inner flow channel is cleaned, which includes following steps:

a cleaning medium is injected into the micro inner flow channel with the predetermined pressure, and the cleaning medium and the liquid phase of the polishing medium dissolve each other, until a Tyndall effect appears on the cleaning medium flowing out of the micro inner flow channel.

The cleaning medium and the water-based liquid are dissolve with each other, for example, the polishing medium is water-based two-phase flow, then the cleaning medium corresponds to deionized water, which can make the water-based liquid phase of the polishing medium be fully cleaned to avoid the defects such as the residue in the bend and dead corner of the inner flow channel caused by abrasive flow technology, which is difficult or even impossible to be completely removed after the completion of processing. The pressure of the cleaning medium is the same as the predetermined pressure, which can make the cleaning medium remove the solid phase of the polishing medium, and the principle is that the inventors found that the residual position of the solid phase is generally related to the pressure, so applying the same pressure can make the cleaning medium "find" the residual solid phase and remove it.

The method of judging whether the cleaning is completed can be done by characterizing the Tyndall phenomenon of the cleaning medium flowing out of the micro inner flow channel after cleaning without disassembling the workpiece for observation and characterization. For example, the outgoing cleaning medium can be fed into and discharged from the transparent container. In this process, the deionized water in the transparent container is always irradiated by the spotlight, and the light state in the cleaned deionized water is observed, if the concentrating light line in the cleaned deionized water is turbid, and there is no straight opalescent column, that is, no Tyndall effect is generated, it indicates that the cleaning has not been completed at this time, and the deionized water is added until the concentrating light line in the deionized water in the transparent container presents a straight opalescence column, that is, the Tyndall effect is generated. It can be understood that after the above cleaning steps, it can also be carried out in turn by ultrasonic cleaning and drying oven drying.

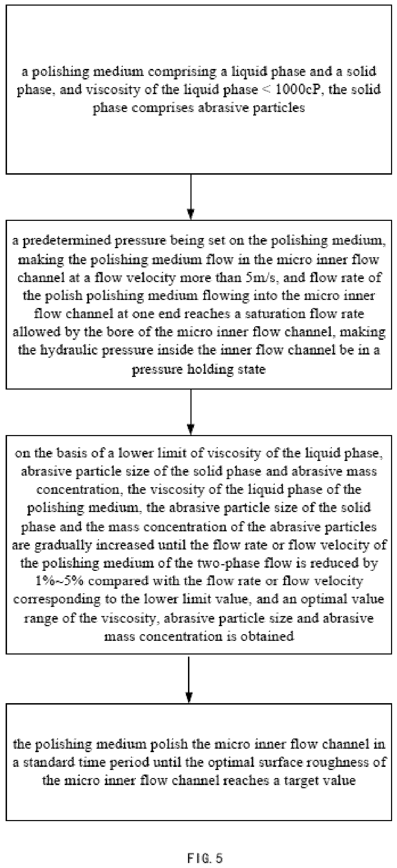

In some embodiments, referring to FIG. 5, steps to obtain the viscosity of the water-based liquid phase of the polishing medium, the abrasive particle size of the solid phase, and the optimal value of the abrasive particle mass concentration of the solid phase are: on the basis of a lower limit of viscosity of the liquid phase, abrasive particle size of the solid phase and abrasive mass concentration, the viscosity of the liquid phase of the polishing medium, the abrasive particle size of the solid phase and the mass concentration of the abrasive particles are gradually increased until the flow rate or flow velocity of the polishing medium of the two-phase flow is reduced by 1%~5% compared with the flow rate or flow velocity corresponding to the lower limit value, and an optimal value range of the viscosity, abrasive particle size and abrasive mass concentration is obtained.

For example, for the viscosity of the liquid phase, in the pure aqueous liquid phase, the Ubbelohde viscometer is used, and the viscosity of the water base is adjusted to the lower limit of 50cP by slowly increasing the tackifier. Then do test processing the inner flow channel, read the initial flow rate or flow velocity data corresponding to the polishing medium and record it as a standard value, increase the tackifier 1g/L and the corresponding viscosity increment of about 10cP, continue to do test processing the inner flow channel, and repeat the increase step until the initial flow rate or flow velocity data is lower than the standard value of the flow rate or flow velocity by 1~5%, then the viscosity of the tackifier is the optimal value, and the viscosity of the corresponding polishing medium is the optimal value. Table 1 shows the optimal range of viscosity for different diameters of the micro inner flow channel.

Table 1: Optimal range of values for the viscosity of the liquid phase of the polished medium corresponding to the different diameters of the micro inner flow channel:

| diameter $\varphi$(mm) | 0.5~1 | 1~1.5 | 1.5~2.5 | 2.5~3 |
|---|---|---|---|---|
| viscosity $\eta$(cP) | 50~80 | 80~120 | 100~150 | 100~200 |

For example, for the abrasive particle size of the solid phase, under the premise of not exceeding the upper limit, conservatively select any lower limit value, and the lower limit of the ratio of the inner flow channel diameter to the particle size of the abrasive particle is usually 20, that is, the inner flow channel diameter should ensure that at least 20 abrasive particles pass through in parallel without blockage, so as to obtain the lower limit value of the abrasive particle size corresponding to different inner flow channel diameters, for example, the corresponding inner flow channel diameter is 3mm, then the upper limit of the corresponding abrasive particle size is 3/20mm, that is, $150\mu$m, on the basis of this upper limit, In order to ensure the safety of the test, 1/5 of the upper limit value is generally selected as the lower limit, that is, the abrasive particle size is increased on the basis of the lower limit value of $30\mu$m. After selecting the lower limit of abrasive particle size, the test processing is carried out, the initial flow rate or flow velocity data corresponding to the polishing medium is read and recorded as a standard value, and then the particle size is increased by $1\mu$m~$10\mu$m on the basis of the lower limit of abrasive particle size, and continuing the test processing the inner flow channel, and the increase steps are repeated until the initial flow rate or flow velocity data is lower than the standard value of flow rate or flow rate of 1~5%, and the particle size of the abrasive particle is the optimal value. Table 2 shows the range of abrasive particle sizes of different diameters corresponding to the micro inner flow channel.

Table 2: Optimal range of abrasive particle size for the different diameters of the micro inner flow channel for the polishing medium:

| diameter $\varphi$(mm) | 0.5~1 | 1~1.5 | 1.5~2.5 | 2.5~3 |
|---|---|---|---|---|
| size ($\mu$m) | 5~25 | 25~38 | 38~63 | 63~120 |

For example, for the mass concentration of abrasive particles in the solid phase, the lower limit of mass concentration is selected according to the mass concentration of abrasive particles of 10g/L, and the inventors found that if it is lower than this lower limit of mass concentration, the grinding effect is insufficient due to the reduction of the probability of grinding points on the surface of abrasive particles, and the lower limit of mass concentration is selected for test processing, and the initial flow rate or flow velocity data corresponding to the polishing medium is read as the standard value, and then the mass concentration of abrasive particles is increased by 2g/L~5g/L on the basis of the lower mass concentration limit. Continuing the test processing of the inner flow channel, and repeat the increase step until the initial flow rate or flow velocity data is 1~5% lower than the standard value of flow rate or flow rate, and the mass concentration of abrasive particles is the optimal value. The optimal values for the mass concentration range of different diameters of the micro inner channel can be found in Table 3. As shown in Table 3, the inventors found that for the micro inner flow channel with a diameter of 0.5mm~1mm, the optimal value of abrasive mass concentration is correspondingly low, which is 10g/L~15g/L, while for the micro inner flow channel with a diameter greater than 1mm, the correlation between the abrasive mass concentration and the diameter size is low, which is 10g/L~35g/L.

Table 3: Optimal value range of abrasive mass concentration for different diameters of micro inner flow channels for the smoothing medium:

| diameter $\varphi$(mm) | 0.5~1 | 1~1.5 | 1.5~2.5 | 2.5~3 |
|---|---|---|---|---|
| mass concentration (g/L) | 10~15 | 10~35 | 10~35 | 10~35 |

It can be understood that the above optimal values can be obtained through processing tests on site, that is, if it is necessary to determine the viscosity, abrasive particle size and abrasive mass concentration of the polishing medium corresponding to a certain micro inner flow channel, it is obtained through test processing according to the above methods. After that, the optimal value can then be applied directly to the polishing process of the micro inner flow channel without the need for further test processing.

In some embodiments, the value of the predetermined pressure P can be calculated by the following formula:

$$Ra = Ra_0 - [\frac{1}{12}L\pi d^3 \left(\frac{\rho_p}{\rho_l}\right)^{\frac{4}{3}} \cdot \frac{Re \cdot D^2 \cdot \chi \cdot P}{32l^2 \cdot \sigma_w} - \frac{b^2}{4d}] \cdot (1-k) \cdot \frac{t}{2}$$

$Ra_0$ is the initial average surface roughness of the micro inner flow channel, $Ra$ is the target value of the optimal surface roughness of the micro inner flow channel after polishing, $t$ is the initial time period, $L$ is the average cutting depth of the abrasive cutting edge, $b$ is the average contact length of the abrasive cutting tip, $\rho_l$ is the water-based liquid phase density, $\rho_p$ is the abrasive solid phase density, $\sigma_w$ is the yield limit of the workpiece material, $\chi$ is the pressurization ratio to reach the saturation flow, Re is the Reynolds number of the liquid phase, $l$ is the length of the micro inner flow channel, $D$ is the diameter of the micro inner flow channel, $d$ is the abrasive particle size, $k$ is the concave-convex grinding ratio coefficient.

The meaning and specific values of the above parameters are generally as follows, the initial average surface roughness $Ra_0$, due to the initial surface roughness of each area of the inner flow channel is not completely consistent, and the average roughness of each area of the inner flow channel is taken, usually the $Ra_0$ data is as follows, 3D printing 6.3μm~30μm, precision casting 3.2μm~6.4μm, machining 0.8μm~1.6μm, laser processing and wire cutting 1.6μm~3.2μm, the target value of the optimal surface roughness after polishing $Ra$ (After polishing, the roughness of each area is not completely consistent due to the initial difference, and the optimal value of the roughness of each area of the inner flow channel is taken), usually the Ra data is as follows, 3D printing and precision casting $\leq 1.6$μm, machining $\leq 0.4$μm, laser processing and wire cutting $\leq 0.8$μm. The length of the micro inner flow channel $l$, the diameter of the channel D$\leq$3mm, the length-diameter ratio $l$/D$\geq$50, the Reynolds number Re is 20~200, which can be calculated by the viscosity and flow rate of the liquid phase, the concave-convex grinding ratio coefficient k is 0.2~0.4, the abrasive particle size d is 5μm~150μm, the average cutting depth of the abrasive edge tip $L$: 1.4nm~14nm, the average cutting depth $L$ of the abrasive cutting tip can be measured by the unit time thinning measurement, and the unilateral thinning rate of the inner flow channel in the water-based two-phase streamer polishing technology is 5μm/h~50μm/h. The average contact length $b$ of the abrasive cutting edge is 50nm~1000nm, the average contact length $b$ of the abrasive cutting edge can be measured by the final limit scratch and the corresponding optimal roughness metric, and the optimal roughness $Ra$ of the abrasive particle after grinding and polishing is 0.05μm~1μm in the water-based two-phase flow polishing technology, so the contact length of the abrasive cutting edge $b$ is 50nm~1000nm. The liquid phase density $\rho_l$ is 1200Kg/m$^3$~1500Kg/m$^3$, for the water-based liquid phase, it is generally 1500Kg/m$^3$, and the abrasive solid phase density $\rho_p$ is 2200Kg/m$^3$~3300Kg/m$^3$, and the specific value is different for different solid abrasive particles. The yield limit $\sigma_w$ of the workpiece material can be obtained from database, $t$ is the initial time period, that is, through the calculation of the initial average roughness and the average cutting depth of the abrasive particle tip, the pressurization ratio $\chi$ under the saturation flow rate needs to be greater than 1, generally between 50~400, the meaning of the pressurization ratio of the saturation flow rate here refers to the ratio of the fluid input into the inner flow channel from a pipeline at the front end of the inner flow channel, and the cross-sectional area of the pipeline cavity at the front end of the inner flow channel and the inner flow channel, for example, for the cylinder body pushing the polishing medium and the inner flow channel cross-sectional area of the workpiece to be processed, the cylinder body is the front end, the inner flow channel is the rear end, and the ratio of the cross-sectional area of the cylinder body and the inner flow channel is 50~400. The specific value depends on actual situations.

The above method solves the problem of presetting the processing parameters of the fine inner flow channel, and makes the polishing method efficient, safe and reliable. It can be understood that the value of the predetermined pressure P can also be obtained by the method of testing, and it only has to meet the flow velocity of >5m/s inside of the micro inner flow channel, for example, a small lower limit value is estimated according to practical experience, and then continue to try until the flow velocity requirement is met, but the efficiency of this method is low, or a database can be calculated and made on the basis of the formula or test data, and then the polishing process only needs to be carried out to check the database. After long-term testing, the inventors obtained engineering parameters of the polishing method corresponding to titanium alloy/superalloy/steel, as shown in Table 4 below.

Table 4: Engineering parameters of polishing methods corresponding to titanium alloys/superalloys/steel:

| material | titanium alloy | | superalloy | | steel | |
|---|---|---|---|---|---|---|
| $D$(mm) | 0.5~1 | | 1~1.5 | | 1.5~3 | |
| $Re$ | 120~200 | | 100~120 | | 50~100 | |
| $l$/D ratio | 50~200 | >200 | 50~200 | >200 | 50~200 | >200 |

(continued)

| material | titanium alloy | | superalloy | | steel | |
|---|---|---|---|---|---|---|
| Predeter -mined pressure $P$(MPa) | 45~50 | 50~55 | 40~50 | 50 55 | 30~40 | 40~55 |
| velocity m/s | 5~200 | | 5~100 | | 5~50 | |
| Surface quality improve ment grade* | 2~3 | | 3~4 | | 4~6 | |
| Enlarged value $\delta$(mm) | 0.03~0.06 | | 0.06~0.16 | | 0.16~0.5 | |
| *Surface quality improvement grade: 50% percent lower surface roughness per grade | | | | | | |

For ceramic/aluminum alloy/polymer materials, the corresponding predetermined pressure P is 50%~70% lower than that of titanium alloy/superalloy/steel material in Table 4.

In some embodiments, the tackifier added to the water-based liquid phase of the polishing medium for providing a certain viscosity includes a polymer tackifier, preferably one or more combinations of long-chain flexible polyethylene oxide and polyacrylphthalamide, etc., the inventors found that the use of polymer tackifier, with the increase of viscosity in a certain range, makes each area of the inner flow channel basically equal flow velocity therefore a uniform grinding and polishing effect. The principle may lie in the fact that the long chain of the polymer provides a turbulent drag reduction effect, reducing the resistance of the liquid along the inner flow channel, so as to achieve a constant flow velocity and uniform grinding effect in each area of the inner flow channel, and avoid the difference between the grinding and polishing effect between the port and internal part. In addition, the inventors also found that if a non-polymer tackifier is used, although the viscosity of the liquid phase can be increased, the difference between the flow channel port and the internal part grinding effect begins to increase, and grinding effect at the flow channel port is heavier than grinding effect at the internal part. The use of polymer tackifier is especially suitable for the structure of the micro inner flow channel including the three-dimensional structure including S-bend, L-shaped bend, U-shaped bend, O-bend and spiral bend, and the turbulent drag reduction effect of the polymer tackifier can ensure that in the polishing process of the structure containing S-bend, L-bend, U-bend, O-bend and spiral bend in the three-dimensional, the liquid phase will not significantly reduce its own flow velocity as a result of the increase of resistance along the inner flow channel, and ensure that the difference between the worst roughness and the optimal roughness in each area within 30%, achieving a uniform polishing result. It is understood that for simpler structures, such as straight inner flow channels, polymer tackifiers is not needed.

In some embodiments, in addition to adding a tackifier to the water-based liquid phase of the polishing medium, a defoamer can also be added, so that in the process of processing the inner flow channel by the polishing method, the volume ratio of the surface foaming slurry of the polishing medium to the volume of the liquid phase does not exceed 0.3:1, and the foam can be prevented from interfering with the micro-cutting process and flow rate, flow velocity and pressure measuring system of the polishing medium. The defoamer can be non-silicone, including alcohols, fatty acids, fatty acid esters, phosphate esters, mineral oils, amides and other organic substances. The defoamer can also be polyether type, including copolymers of ethylene oxide and propylene oxide. The defoamer can also be silicone-based, including dimethicone and dimethicone. One or more combinations of lauric acid, polymeric propylene oxide is preferred, and the mass concentration of defoamer is 1g/L~5g/L.

In some embodiments, lubricant can also be added to the polishing medium, the mass concentration of lubricant is 1g/L~10g/L, and the lubricant can be $MoS_2$, graphite powder, talc, tetraboron nitride, calcium fluoride, barium fluoride, lead oxide and other elemental or inorganic substances, and organic polymer compounds such as polytetrafluoroethylene and polyimide can also be selected. Preferably one or more combinations of $MoS_2$ and graphite powder, the lubricant should ensure that the flow rate, flow velocity and pressure of the polishing medium during the polishing process will not be suddenly reduced by more than 5% due to the possible blockage of abrasive particles, so as to ensure the reliability of the polishing process.

In addition, in some embodiments, additives of the following mass concentrations can also be added to the liquid phase of the polishing medium, such as: rust inhibitor 1g/L~5g/L, to prevent the rust of the water-based liquid phase to the processed parts, dispersant 20g/L~30g/L, to make the solid phase abrasive particles in the polishing medium, and various added substances be well dispersed in the liquid phase, especially in the water-based system, antifreeze 1g/L~2g/L, in order to prevent the freezing of the polishing medium due to low temperature, which will reduce the flow rate and affect the polishing process.

As described above, a micro inner flow channel part can be obtained through the polishing method introduced in the above embodiments, which has a micro inner flow channel diameter of less than or equal to 3mm, length-diameter ratio more than 50:1, and the optimal surface roughness $Ra$ can even reach 0.05μm, and because of a very low surface roughness, problems that burrs, adhesion residue particles or adhesive powder fall off and become redundant and spread with the fluid everywhere with the fluid, or block the flow channel are solved, and it also solves problem that the inner surface with high roughness is easy to become a source of fatigue cracks during long-term use, and it is easy to cause carbon deposition if it is a high-temperature oil circuit system. It also avoids the "step" effect on the inner surface of the inner flow channel, which leads to turbulence, and a sharp increase in the resistance along the fluid during the fluid movement, and even causes the fluid to lose control, causing vibration and reducing the service life of the parts; and it also solves problem that the generation of a large number of cavitation bubbles in the fluid of the micro inner flow channel, which affects combustion and hydraulic force, and even produces cavitation corrosion. For example, in some embodiments, through the polishing method introduced in the above embodiments, the micro inner flow channel part is an aero-engine additive manufacturing superalloy fuel nozzle, an oil circuit is a micro inner flow channel, the diameter is less than 2.5mm, and the length-diameter ratio is greater than 50:1, and the surface optimal roughness $R$a is less than or equal to 1.6$\mu$m, in addition, because such a low surface optimal roughness is achieved after polishing, it indicates that the powder particles that exist on the surface of the inner flow channel due to sintering or half-sintering have been removed during the polishing process. Compared with the fuel nozzle of additive manufacturing without polishing, it can avoid burrs, adhesion residue particles or adhesive powder falling off when the fuel introduced into the inner flow channel and the surface layer at high speed can become excess and spread everywhere with the fluid, or block the oil circuit or cause mechanical wear failure, thus causing major safety accidents; It also avoids that the inner surface with high roughness is easy to become a source of fatigue cracks in the process of long-term use, and it is easy to lead to carbon deposition if it is a high-temperature oil circuit system; It also avoids the "step" effect on the surface of the inner flow channel, which leads to turbulence and a sharp increase in resistance along the fluid during the fluid movement, and even causes the fluid to run out of control, produce vibration and reduce the service life of the parts. It also avoids the rough surface, which will also produce a large number of cavitation bubbles in the fluid, which will affect combustion and hydraulic force, and even cavitation corrosion.

For example, in some embodiments, the fine inner flow channel workpiece obtained by the polishing method introduced in the above embodiment is an aero-engine casting superalloy hollow blade, the hollow blade has an inner cavity structure that the micro inner flow channel is connected with a small hole, the length-diameter ratio is greater than 50:1, and the diameter of the small hole on the blade surface is 0.3mm~0.6mm, Moreover, the roughness of the inner wall of the small hole $R$a is less than or equal to 0.8$\mu$m, without a remelt layer, and the chamfer radius of the hole is greater than 0.1mm, so that the premature failure of the parts due to the microcracks on the surface of the remelted layer can be avoided, and the life of the hollow blade is prolonged and the aerodynamic performance is improved.

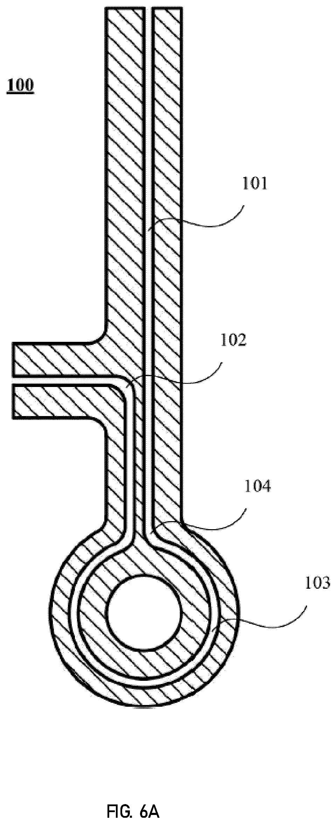

In order to illustrate the effect of the present disclosure more clearly, six specific examples of micro inner flow channel parts using the polishing method described in the above embodiments are listed below. It should be noted that the schematic diagram of the structure of the parts shown in FIG. 6A, FIG. 7A, FIG. 8A, FIG. 9A, FIG. 10A, and FIG. 11A is not drawn to equal scale.

The first embodiment

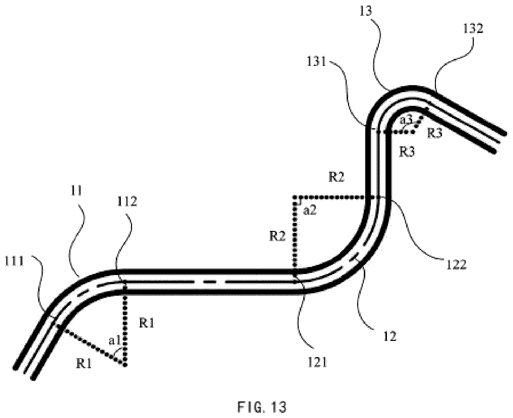

As shown in FIG. 6A, the target product of this embodiment is a certain type of aero engine fuel nozzle 100, the inner flow channel to be processed is manufactured by laser additive manufacturing, the diameter of the micro inner flow channel D = 1.3mm~1.4mm, the total length of the flow channel is 130mm~140mm, and the length-diameter ratio is 100, and the structure of straight line 101, L-bend 102 and O-bend 103 are included. For the bending structure, as shown in FIG. 13, its parameters mainly include the bending radius and the bending angle, the bending point is the point where the initial bending occurs along the axis (straight line), the bending angle is the central angle corresponding to the arc length between the adjacent two bending points, and the bending radius is defined as the radius of curvature corresponding to the arc length between the adjacent two bending points. As shown in FIG. 13, the bending points of the first bending structure 11 are bending points 111, 112, the bending radius is R1, and the bending angle a1 is an acute angle, the bending points of the second bending structure 12 are bending points 121, 122, the bending radius is R2, the bending angle a2 is a right angle, the bending points of the third bending structure are bending points 131, 132, the bending radius is R3, and the bending angle a3 is an obtuse angle. As shown in FIG. 6A, the bending angle of L-bend 102 is about 90°, and the bending radius is about 6mm, the bending angle of the bending point 104 of O-bend 103 and straight line 101 is about 60°, and the bending radius is about 8mm, and the bending angle of O-bend 103 is 180°, and the bending radius is about 15mm. The material is a superalloy.

The specific polishing method includes following steps:

Step 1: Preparation of polishing medium. First, adding antifreeze, defoamer, rust remover, dispersant and lubricant to deionized water; by Ubbelohde viscometer, slowly increase the tackifier to adjust the water-based viscosity to 50cP, and then do test processing of the inner flow channel parts, read the flow rate or flow velocity data as a standard value, continue to increase the tackifier 1g/L and the corresponding viscosity increase of about 10cP, continue to carry out the inner flow channel test processing, until the initial flow rate or flow velocity data is lower than the standard value of 1% ~5%, at this time the concentration of the tackifier is the optimal value, the viscosity of the corresponding polishing medium is the optimal value, and the optimal amount of tackifier added to the fuel nozzle is 4g/L~5g/L, that is, the viscosity of the liquid phase of the polishing medium is 90cP~100cP. Similarly, for the abrasive particle size, under the premise of not exceeding the upper limit, any lower limit value is conservatively selected, and the lower limit value of the ratio of the inner flow channel diameter to the particle size of the abrasive particle is usually 20, that is, the inner flow channel diameter should ensure that at least 20 abrasive particles can pass in parallel without blocking, that is, the upper limit of the particle size is $70\mu$m, and the lower limit of the particle size is $13\mu$m. Then the lower limit of the particle size is used to do test processing of the inner flow channel parts, the flow rate or flow velocity data is recorded as a standard value, $1\mu$m~$10\mu$m is added on the basis of the initial particle size, and the inner flow channel test processing is continued until the initial flow rate or flow velocity data is lower than the standard value of 1%~5%, then the abrasive particle size is the optimal value, and the abrasive particle size d is $30\mu$m~$32\mu$m. Similarly, for the mass concentration of abrasive particles, firstly, the lower limit of the mass concentration of abrasive particles is 10g/L for test processing of the inner flow channel parts, a standard value of flow rate or flow velocity data is read, 2g/L~5g/L is added on the basis of the mass concentration of abrasive particles of 10g/L, and the inner flow channel test processing is continued until the flow rate or flow velocity data is lower than the standard value of 1%~5%, and the mass concentration of abrasive particles is the optimal value at this time. After testing, the optimal abrasive mass concentration is 20~22g/L. After all the above substances are added in deionized water, the two-phase polishing medium is prepared, and the polishing medium is added to the material tank.

Step 2: The specific characteristic parameters related to the fuel nozzle, pipe length $l$ = 130mm~140mm, diameter D = 1.3mm~1.4mm, length diameter ratio $l$/D = 100, initial average roughness $Ra_0$ = $10\mu$m, the target value of the optimal roughness after polishing $Ra$ = $1.6\mu$m, Reynolds number Re = 120, concave and convex grinding ratio coefficient k = 0.3, average abrasive particle size $d$ = $30\mu$m, the average cutting depth of the abrasive cutting edge L = 3.3nm, that is, the unilateral thinning rate in the polishing process is about $12\mu$m/h, the average contact length of the abrasive tip cutting is $b$ = 500nm, that is, the final limit scratch and the corresponding optimal roughness $Ra$ is $0.5\mu$m, the water-based liquid phase density is $\rho l$ = 1500Kg/m$^3$, the abrasive solid phase density is $\rho p$ = 3300Kg/m$^3$, the yield limit of superalloy material is $\sigma_w$ = 300MPa, the initial time processing time is $t$ = 1h, and the pressurization ratio is $\chi$ = 145. Bring the above parameters into the following formula:

$$Ra = Ra_0 - [\frac{1}{12} L \pi d^3 \left(\frac{\rho_P}{\rho_l}\right)^{\frac{4}{3}} \cdot \frac{\text{Re} \cdot D^2 \cdot \chi \cdot P}{32l^2 \cdot \sigma_w} - \frac{b^2}{4d}] \cdot (1-k) \cdot \frac{t}{2}$$

Calculate and obtain a predetermined pressure P = 46.7 MPa.

Step 3: The predetermined pressure P = 46.7MPa and processing time 1 h in the Step 2 are input into a device for test processing. After the test processing, a plug gauge test was carried out on the port diameter of the flow channel of the test workpiece, and the $\delta$ was the enlarged value of the port diameter, and it was found that the $\delta$ = 0.04mm, failed to reach the target value of the diameter enlarged value after calculating according to $Ra$ = $1.6\mu$m according to the following formula $\delta$ = 0.096mm. It shows that the roughness of the inner flow channel does not reach the target optimal roughness $Ra$ = $1.6\mu$m after the polishing.

$$Ra^* = Ra_0 - \delta \cdot \frac{(1-k)}{8}$$

Step 4: Continue to increase the stepping time by 1h, and finally the cumulative total processing time of 8 hours reaches the target value of diameter expansion $\delta$ = 0.096mm.

Step 5: Enter the time period of 8 hours and the predetermined pressure P = 46.7MPa to the device for formal processing, and when the processing reaches 8 hours, the device will automatically stop and the processing will end.

Step 6: After the processing is completed, suck out the polishing medium in the tank and clean the tank, and add $0.1\mu$s/cm~$10\mu$s/cm clean deionized water to the tank as a cleaning medium. Set the pressure to P = 46.7MPa, turn on the device to apply the pressure to the deionized water to do cleaning, and when the deionized water discharged through the inner flow channel under spotlight irradiates a straight opalescent column, that is, the Tyndall effect, and the cleaning is completed.

Step 7: Ultrasonic cleaning of the part for 10 minutes, air gun blow drying, and finally drying in the drying oven to complete the final cleaning.

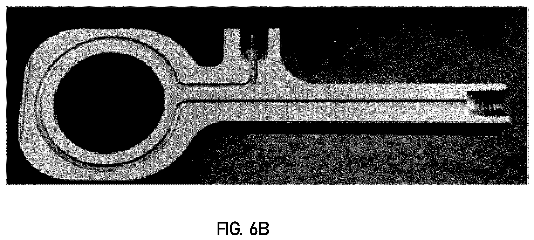

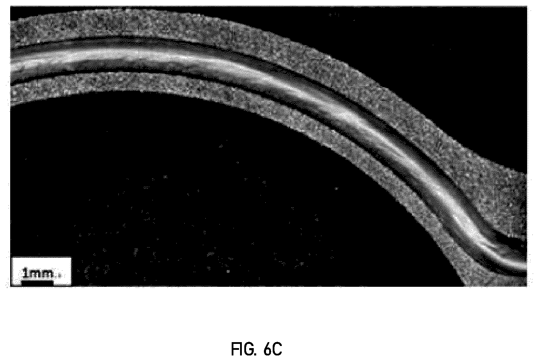

As shown in FIG. 6B, the polished fuel nozzle is split along the axis of the flow channel by wire cutting, and further enlarged to obtain the one shown in FIG. 6C that a flattening surface close to the machining surface and the significant polishing result that can be clearly seen on the inner surface of the flow channel, and the surface is smooth and bright. And no residue, mosaic and semi-sintered additive manufacturing powder shown by metallographic testing, and the optimal roughness $Ra = 1.3\mu m$ by roughness measuring, meeting the target requirement of $Ra < 1.6\mu m$.

The second embodiment

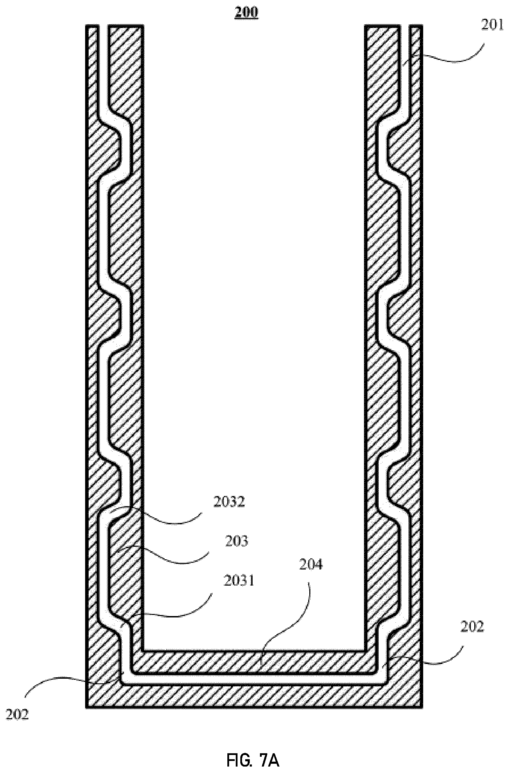

As shown in FIG. 7A, the target product of the present embodiment is an inner flow channel 200 of a certain type of heat exchanger, the inner flow channel to be processed is manufactured by laser additive manufacturing technology, and the structural characteristics are that the diameter of the micro inner flow channel is D = 2.3mm~2.4mm, the total length of the flow channel is $l$ = 500mm, the length-diameter ratio is $l/D$ = 208, and the structure of a straight line 201, an L-shaped bend 202, an S-shaped bend 203 and a U-shaped bend 204 are included, and the bending angle of the S-shaped bend 203 is about 60°, That is, the bending angle of the first bending structure 2031 and the second bending structure 2032 of the S-shaped bend 2033 shown in FIG. 7A is 60°, the bending radius is about 6mm, the bending angle of the L-shaped bend 202 is 90°, and the U-shaped bend 204 is the structure including two symmetrical L-shaped bends 202. The material is aluminum alloy. The specific polishing methods includes following steps:

Step 1: Similar to the first embodiment and will not be repeated here. The viscosity of the liquid phase of the two-phase flow polishing medium is 100cP~120cP, the abrasive particle size $d$ is = 50μm~52μm, and the optimal abrasive mass concentration is 30g/L~35g/L.

Step 2: The specific characteristic parameters related to the flow channel in the heat exchanger, length $l$ = 500mm, diameter D = 2.3mm~2.4mm, length diameter ratio $l/D$ = 208, initial average roughness $Ra_0$ = 25μm, target value of optimal roughness after polishing $Ra$ = 1.6μm, Reynolds number Re = 60, concave and convex grinding ratio coefficient k = 0.2, abrasive particle size $d$ = 50μm, the average cutting depth of the abrasive cutting edge $L$ = 10nm, that is, the unilateral thinning rate in the polishing process is about 35μm/h, the average contact length of the abrasive cutting edge is $b$ = 800nm, that is, the final limit scratch and the corresponding optimal roughness $Ra$ is 0.8μm, the water-based liquid phase density is $\rho_l$ = 1500Kg/m$^3$, the abrasive solid phase density is $\rho_p$ = 3300Kg/m$^3$, the yield limit of aluminum alloy material $\sigma_w$ = 100MPa, the initial time period $t$ = 1h, and the pressurization ratio $\chi$ = 87.

$$Ra = Ra_0 - [\frac{1}{12}L\pi d^3 \left(\frac{\rho_p}{\rho_l}\right)^{\frac{4}{3}} \cdot \frac{Re \cdot D^2 \cdot \chi \cdot P}{32l^2 \cdot \sigma_w} - \frac{b^2}{4d}] \cdot (1-k) \cdot \frac{t}{2}$$

Calculate and obtain a predetermined pressure P = 51.5MPa.

Step 3: The predetermined pressure P = 51.5MPa and the initial time period of 1h in the Step 2 are input into a device for test processing. After the test processing, a plug gauge test is carried out on the port diameter of the inner flow channel of the test workpiece, and the $\delta$ is the enlarged value of the port diameter, and it is found that the $\delta$ = 0.22mm, which reaches more than 90% of the target value $\delta$ = 0.234mm) calculated according to the following formula according to Ra = 3.2μm, indicating that the total time of the inner flow channel polishing processing is 1 hour to reach the target value $Ra$ = 1.6μm of the expected optimal roughness after the polishing.

$$Ra^* = Ra_0 - \delta \cdot \frac{(1-k)}{8}$$

Step 4: Enter the standard time period of 1 hour and the predetermined pressure P = 51.5MPa in the device for formal processing, and the device will automatically stop when the processing lasts for the standard time period.

Step 5: After the processing, suck out the polishing medium in the tank and clean the tank, and add 0.1μs/cm~10μs/cm clean deionized water to the tank as a cleaning medium. Set the pressure to P = 51.5MPa, turn on the device to apply the pressure to the deionized water to do cleaning, and when the deionized water discharged through the inner flow channel under spotlight irradiates a straight opalescent column, that is, the Tyndall effect, and the cleaning is completed.

Step 6: Ultrasonic cleaning of the part for 10 minutes, air gun blow drying, and finally drying in the drying oven to complete the final cleaning.

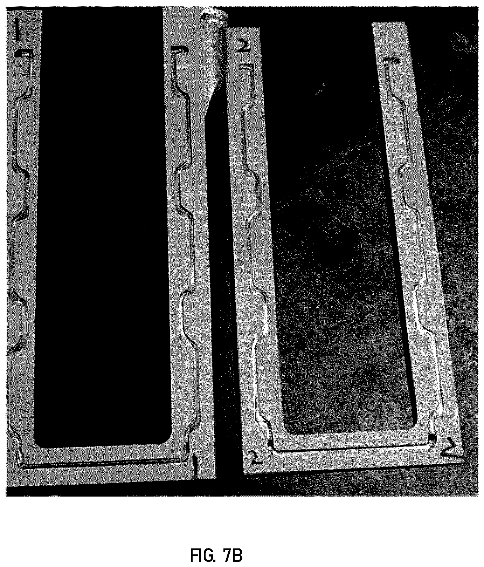

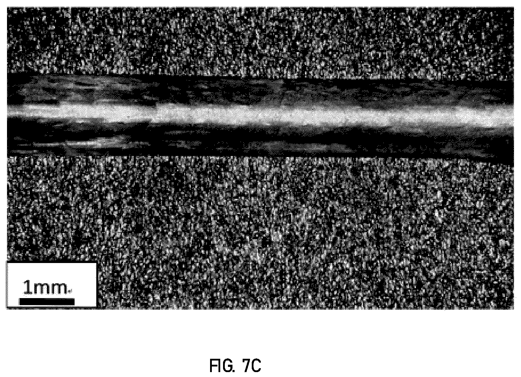

As shown in FIG. 7B, a certain type of heat exchanger after being polished is split along the axis of the flow channel using wire cutting, and further enlarged to obtain the one shown in FIG. 7C that a flattening surface close to the machining surface and the significant polishing result that can be clearly seen on the inner surface of the flow channel, and the surface is smooth and bright. And no residue, mosaic and semi-sintered additive manufacturing powder shown by metallographic testing, and the optimal roughness $Ra = 1.08\mu m$ by roughness measuring, meeting the target requirement of $Ra<1.6\mu m$.

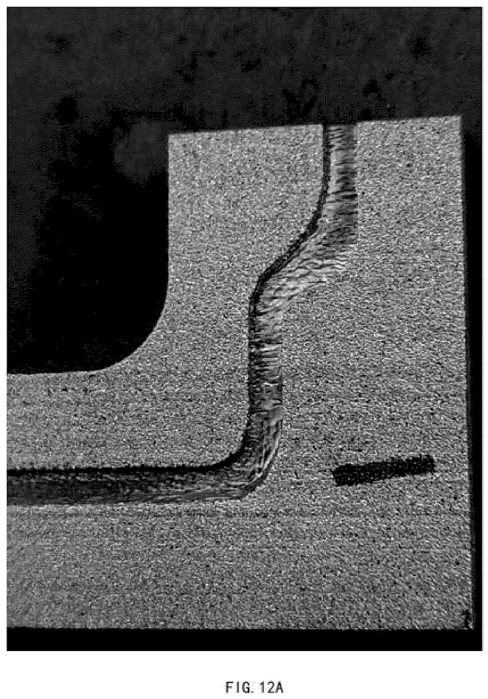

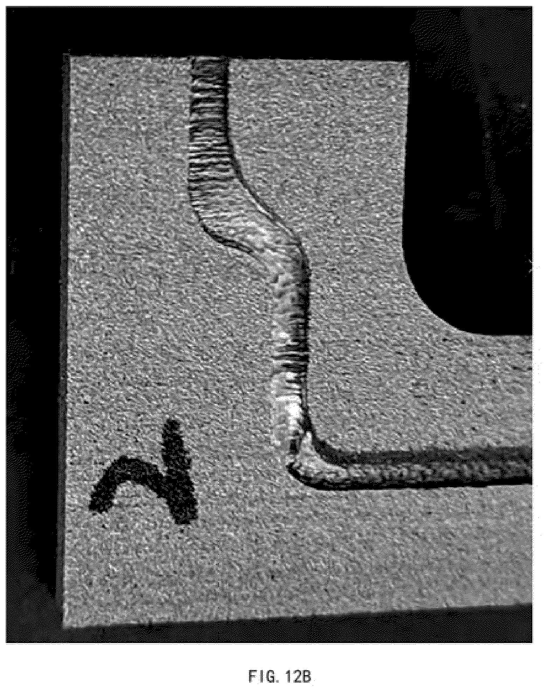

In addition, in a comparison scheme, such as the predetermined pressure applied to the polishing of the inner flow channel of the second embodiment is 21.2MPa, as shown in FIG. 12A and FIG. 12B, taking the area near the first bending structure 2031 of the S-bend attached to the U-bend 204 as an example, an obvious "orange peel effect" appears on the surface after processing, and the roughness is not significantly improved. The reason is that the inventors later calculated and found that the flow velocity of the polishing medium is 4.2m/s, which cannot reach the critical flow velocity of >5m/s of non-Newtonian fluids, and cannot realize the targeted grinding of only the bumps, and can only grind the high and low points of the surface together, leaving a significant "orange peel effect" on the surface, and cannot realize surface bump targeted processing when the velocity is >5m/s.

The third embodiment

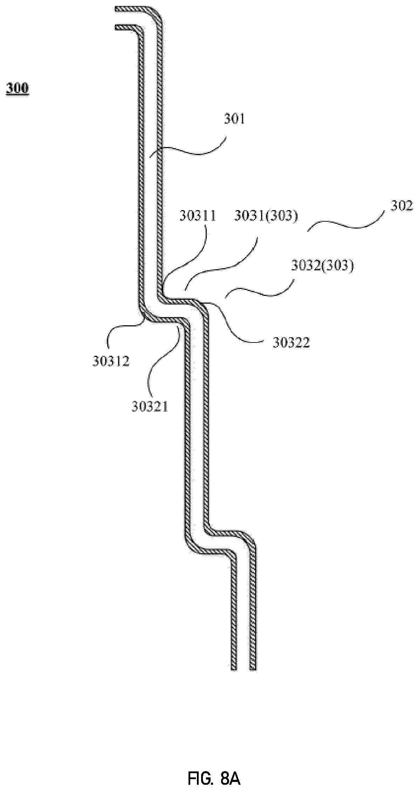

As shown in FIG. 8A, the target product of the present embodiment is an inner flow channel 300 of a certain type hydraulic assembly, the inner flow channel to be processed is manufactured by laser additive manufacturing technology, the structure is that the diameter of the micro inner flow channel D = 3mm, the total length of the flow channel $l$ = 150mm, the length-diameter ratio l/D = 50, includes a straight line 301, an S-bend 302 and an L-bend 303, the meaning of the S-bend 302 therein is a stepped structure composed of a plurality of continuous L-bends, and the bending angle of the L-bend 303 is an inward bend of about 90°. The outer bend is about 60°, and the meaning of the inside and outside here is the distance from the center of the circle in the bending area when the fluid movement bends, and the one close to the center of the circle is an inner bend, and the one far away from the center of the circle is an outer bend. For example, as shown in FIG. 8A, the inner bend 30311 of the first bending structure 3031 of the L-shaped bend 3033 is about 90°, the outer bend 30312 is about 60°, the inner bend 30321 of the second bending structure 3032 of the L-bend 3033 is about 90°, the outer bend 30322 is about 60°, the bending radius is about 10mm, and the material is titanium alloy. The specific polishing method includes following steps:

Step 1: Similar to the first embodiment and will not be repeated here. The viscosity of the liquid phase of the two-phase flow polishing medium is 120cP~150cP, the abrasive particle size $d$ = 100$\mu$m~120$\mu$m, and the optimal abrasive mass concentration is 30~35g/L.

Step 2: the specific characteristic parameters related to the inner flow channel of the hydraulic assembly, length $l$ = 150mm, diameter D = 3mm, length diameter ratio l/D = 50, initial average roughness $Ra_0$ = 25$\mu$m, the target value of the optimal roughness after polishing $Ra$ = 3.2$\mu$m, Reynolds number Re = 50, concave and convex grinding ratio k = 0.1, abrasive particle size $d$ = 100$\mu$m, the average cutting depth of the abrasive cutting edge $L$ = 14nm, that is, the unilateral thinning rate in the polishing process is about 50$\mu$m/h, the average contact length of the abrasive cutting edge is $b$ = 1000nm, that is, the final limit scratch and the corresponding optimal roughness $Ra$ is 1$\mu$m, the water-based liquid phase density is $\rho_l$ = 1500Kg/m$^3$, the abrasive solid phase density is $\rho_p$ = 3300Kg/m$^3$, the yield limit of aluminum alloy material $\sigma_w$ = 600MPa, the initial time period $t$ = 0.5h, and the pressurization ratio $\chi$ = 65.

$$Ra = Ra_0 - [\frac{1}{12}L\pi d^3\left(\frac{\rho_p}{\rho_l}\right)^{\frac{4}{3}} \cdot \frac{\text{Re}\cdot D^2 \cdot \chi \cdot P}{32l^2 \cdot \sigma_w} - \frac{b^2}{4d}] \cdot (1-k) \cdot \frac{t}{2}$$

Calculate and obtain a predetermined pressure P = 40MPa.

Step 3: The predetermined pressure P = 40MPa and the initial time period of 0.5h in the Step 2 are input into a device for test processing. After the test processing, a plug gauge test is carried out on the port diameter of the inner flow channel of the test workpiece, and the $\delta$ is the enlarged value of the port diameter, and it is found that the $\delta$ = 0.22mm, which reaches the target enlarged value $\delta$ = 0.194mm calculated according to the following formula according to $Ra$ = 3.2$\mu$m, indicating that the total time of the inner flow channel polishing processing is 0.5 hour to reach the target value $Ra$ = 3.2$\mu$m of the expected optimal roughness after the polishing.

$$Ra^* = Ra_0 - \delta \cdot \frac{(1-k)}{8}$$

Step 4: Enter the standard time period of 0.5 hour and the predetermined pressure P = 40MPa in the device for formal processing, and the device will automatically stop when the processing lasts for the standard time period.

Step 5: After the processing, suck out the polishing medium in the tank and clean the tank, and add

0.1μs/cm~10μs/cm clean deionized water to the tank as a cleaning medium. Set the pressure to P = 40MPa, turn on the device to apply the pressure to the deionized water to do cleaning, and when the deionized water discharged through the inner flow channel under spotlight irradiates a straight opalescent column, that is, the Tyndall effect, and the cleaning is completed.

Step 6: Ultrasonic cleaning of the parts for 10 minutes, air gun blow drying, and finally drying in the drying oven to complete the final cleaning.

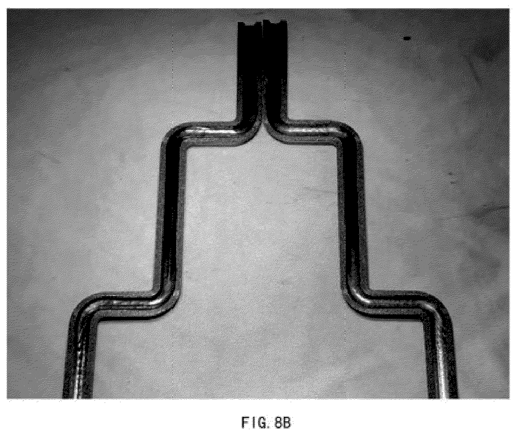

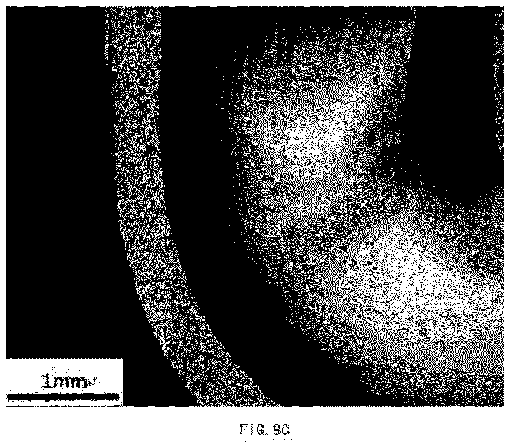

Referring to FIG. 8B, the inner surface of the inner flow channel of a certain type of hydraulic assembly after being polished is split along the axis of the flow channel using wire cutting is further enlarged by wire cutting, and further enlarged to obtain the one shown in FIG. 8C that a flattening surface close to the machining surface and the significant polishing result that can be clearly seen on the inner surface of the flow channel, and the surface is smooth and bright. And no residue, mosaic and semi-sintered additive manufacturing powder shown by metallographic testing, and the optimal roughness $Ra = 2.6\mu m$ by roughness measuring, meeting the target requirement of $Ra<3.2\mu m$.

The fourth embodiment

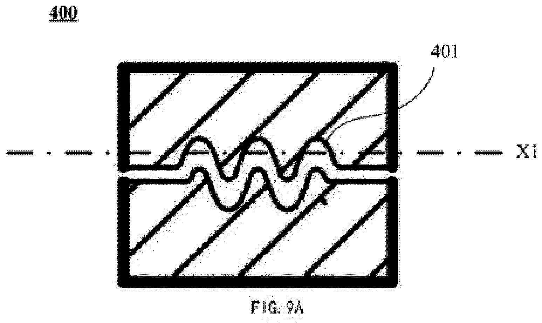

As shown in FIG. 9A, the target product of this embodiment is an inner flow channel 400 of a certain type of flow restrictor, and the inner flow channel to be polished is manufactured by laser additive manufacturing technology, the structure is that the diameter of the micro inner flow channel D = 0.5mm, the total length of the flow channel $l$ = 200mm, the length-diameter ratio $l/D$ = 400, and includes a structure of the spiral bend 401, the bending angle is 180°, and the bending radius is 5.5mm. The material is stainless steel. The specific polishing method includes following steps:

Step 1: Similar to the first embodiment and will not be repeated here. The viscosity of the liquid phase of the two-phase flow polishing medium is 50cP~60cP, the abrasive particle size is $d$ = 5μm~6μm, and the optimal abrasive mass concentration is 10g/L~12g/L.

Step 2: the specific characteristic parameters related to the inner flow channel of the flow restrictor, length $l$ = 200mm, diameter D = 0.5mm, length diameter ratio $l/D$ = 400, initial average roughness $Ra_0$ = 6.4μm, the target value of the optimal roughness after polishing $Ra$ = 0.6μm, Reynolds number Re = 180, concave and convex grinding ratio k = 0.4, abrasive particle size $d$ = 5μm, the average cutting depth of the abrasive cutting edge $L$ = 2 nm, that is, the unilateral thinning rate in the polishing process is about 7μm/h, the average contact length of the abrasive cutting edge is $b$ = 100 nm, that is, the final limit scratch and the corresponding optimal roughness $Ra$ is 0.1μm, the water-based liquid phase density is $\rho_l$ = 1500Kg/m³, the abrasive solid phase density is $\rho_p$ = 3300Kg/m³, the yield limit of aluminum alloy material $\sigma_w$ = 170 MPa, the initial time period $t$ = 1h, and the pressurization ratio $\chi$ = 500.

$$Ra = Ra_0 - [\frac{1}{12}L\pi d^3\left(\frac{\rho_p}{\rho_l}\right)^{\frac{4}{3}} \cdot \frac{\text{Re} \cdot D^2 \cdot \chi \cdot P}{32l^2 \cdot \sigma_w} - \frac{b^2}{4d}] \cdot (1-k) \cdot \frac{t}{2}$$

Calculate and obtain a predetermined pressure P = 55MPa.

Step 3: The predetermined pressure P = 55MPa and processing time 1h in the Step 2 are input into a device for test processing. After the test processing, a plug gauge test was carried out on the port diameter of the flow channel of the test workpiece, and the δ was the enlarged value of the port diameter, and it was found that the δ = 0.024mm, failed to reach the target value of the diameter enlarged value after calculating according to $Ra$ = 0.8μm according to the following formula δ = 0.075mm. It shows that the roughness of the inner flow channel does not reach the target optimal roughness Ra = 0.8μm after the polishing.

$$Ra^* = Ra_0 - \delta \cdot \frac{(1-k)}{8}$$

Step 4: Continue to increase the stepping time by 1h, and finally the cumulative total processing time of 8 hours reaches the target value of diameter expansion δ = 0.075mm.

Step 5: Enter the time period of 8 hours and the predetermined pressure P = 55MPa to the device for formal processing, and when the processing reaches 8 hours, the device will automatically stop and the processing will end.

Step 6: After the processing is completed, suck out the polishing medium in the tank and clean the tank, and add 0.1μs/cm~10μs/cm clean deionized water to the tank as a cleaning medium. Set the pressure to P = 55MPa, turn on the device to apply the pressure to the deionized water to do cleaning, and when the deionized water discharged through the inner flow channel under spotlight irradiates a straight opalescent column, that is, the Tyndall effect, and the cleaning is completed.

Step 7: Ultrasonic cleaning of the part for 10 minutes, air gun blow drying, and finally drying in the drying oven to complete the final cleaning.

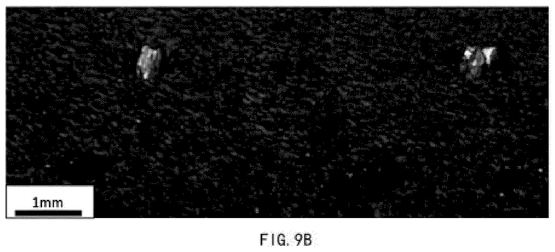

The polished part is split along the axis X1 of the flow channel in FIG. 9A by wire cutting, and further enlarged to obtain the one shown in FIG. 9B that cross section of channel port of the spiral bend includes a group of circular holes inclined arranged, and through the holes, it can be clearly seen that a flattening surface close to the machining surface and the significant polishing result that can be clearly seen on the inner surface of the flow channel, and the surface is smooth and bright. And no residue, mosaic and semi-sintered additive manufacturing powder shown by metallographic testing, and the optimal roughness $Ra = 0.7\mu m$ by roughness measuring, meeting the target requirement of $Ra<0.8\mu m$.

The fifth embodiment

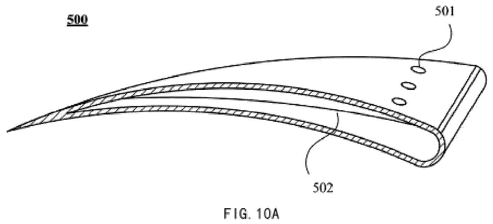

As shown in FIG. 10A, the target product of this embodiment is an aero-engine superalloy hollow blade 500, the blade body is manufactured by precision casting, the air film hole 501 is formed by EDM to open the hole, and the air film hole 501 has a hole diameter of 0.3mm~0.6mm, and the thickness of a remelt layer is $5\mu m$. The micro inner flow channel in the blade body is communicated with the air film hole 501 on the surface, the hollow blade 500 has an inner cavity structure 502 that the micro inner flow channel is communicated with the air film hole 501, the micro inner flow channel structure is that a diameter D less than or equal to 3mm, the total length of the flow channel is 300mm, and the length-diameter ratio is greater than or equal to 100, it can be understood that FIG. 10A is only for illustration, and the actual number of air film holes 501 is generally much greater than three. The specific polishing method of the air film hole 501 on the surface of the blade includes following steps:

Step 1: Similar to the first embodiment and will not be repeated here. The viscosity of the liquid phase of the two-phase flow polishing medium is 50cP~60cP, the abrasive particle size $d$ is = $5\mu m$~$6\mu m$, and the optimal abrasive mass concentration is 10g/L~12g/L.

Step 2: The specific characteristic parameters related to the flow channel in the hollow blade, length $l$ = 300mm, diameter of the inner flow channel D = 3mm, length diameter ratio $l/D$ = 100, diameter of the air film hole D = 0.5mm, initial average roughness $Ra_0$ = 1.6$\mu$m, target value of optimal roughness after polishing $Ra$ = 0.8$\mu$m, Reynolds number Re = 180, concave and convex grinding ratio coefficient k = 0.4, abrasive particle size $d$ = 5$\mu$m, the average cutting depth of the abrasive cutting edge $L$ = 10nm, that is, the unilateral thinning rate in the polishing process is about 7$\mu$m/h, the average contact length of the abrasive cutting edge is $b$=50nm, that is, the final limit scratch and the corresponding optimal roughness $Ra$ is 0.05$\mu$m, the water-based liquid phase density is $\rho_l$ = 1500Kg/m$^3$, the abrasive solid phase density is $\rho_p$ = 3300Kg/m$^3$, the yield limit of aluminum alloy material $\sigma_w$ = 170MPa, the initial time period $t$ = 30min, and the pressurization ratio $\chi$ = 400.

$$Ra = Ra_0 - [\frac{1}{12}L\pi d^3\left(\frac{\rho_p}{\rho_l}\right)^{\frac{4}{3}} \cdot \frac{Re \cdot D^2 \cdot \chi \cdot P}{32l^2 \cdot \sigma_w} - \frac{b^2}{4d}] \cdot (1-k) \cdot \frac{t}{2}$$

Calculate and obtain a predetermined pressure P = 40 MPa.

Step 3: The predetermined pressure P = 40MPa and the initial time period of 30min in the Step 2 are input into a device for test processing. After the test processing, a plug gauge test is carried out on the port diameter of the inner flow channel of the test workpiece, and the $\delta$ is the enlarged value of the port diameter, and it is found that the $\delta$ = 0.01mm, which means a unilateral thinning reaching 5$\mu$m, which can fully remove the remelt layer, and the $\delta$=0.01mm reaches more than 90% of the target value $\delta$ = 0.011mm calculated according to the following formula according to Ra = 0.8$\mu$m, indicating that surface roughness of wall surface of the hole reaches the target value Ra = 0.8$\mu$m.

$$Ra^* = Ra_0 - \delta \cdot \frac{(1-k)}{8}$$

Step 4: Enter the standard time period of 30 mins and the predetermined pressure P = 40MPa in the device for formal processing, and the device will automatically stop when the processing lasts for the standard time period.

Step 5: After the processing, suck out the polishing medium in the tank and clean the tank, and add 0.1$\mu$s/cm~10$\mu$s/cm clean deionized water to the tank as a cleaning medium. Set the pressure to P = 40MPa, turn on the device to apply the pressure to the deionized water to do cleaning, and when the deionized water discharged through the inner flow channel under spotlight irradiates a straight opalescent column, that is, the Tyndall effect, and the cleaning is completed.
Step 6: Ultrasonic cleaning of the part for 10 minutes, air gun blow drying, and finally drying in the drying oven to complete the final cleaning.

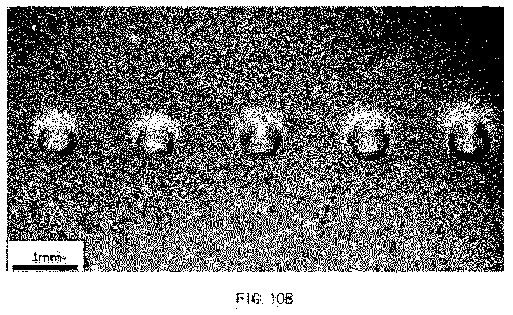

As shown in FIG. 10B, the photo of local the hole after being polished, the surface is observed with a microscope, the inner surface of hole can be clearly seen close to the flattening of the machined surface and the significant polishing result, the surface is smooth and bright, and the orifice has a large halo, that is, the chamfer radius of the hole is greater than 0.1mm, so as to prevent fatigue corrosion micro-cracks on the sharp edge of the hole when the air passes. The optimal roughness Ra = 0.8$\mu$m was measured by roughness, reaching the target requirement of $Ra$ is 0.8$\mu$m. The fifth embodiment is different from the first to the fourth embodiments in that its purpose is to process the air film hole 501 on the surface, but not to process the micro inner flow channel of the blade body, and the inventors found that the air film hole 501 of the aero engine is polished by using a polishing method of the micro inner flow channel, and it can achieve the effect of completely removing the remelt layer, and because of the processing using the fluid, the polishing medium can smoothly realize the polishing of the air film hole from the inner flow channel of the blade body.

The sixth embodiment

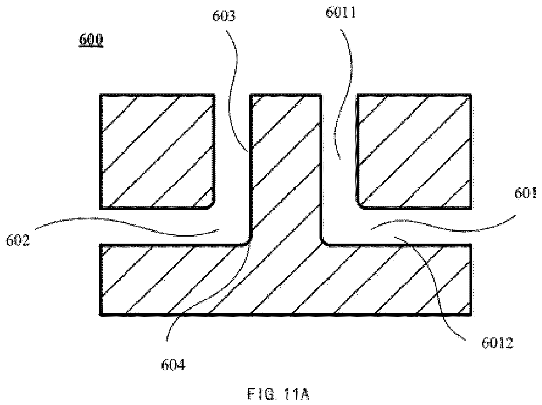

As shown in FIG. 11A, the target product of the embodiment is a valve 600 with an intersecting deep hole, the inner flow channel part to be polished is manufactured by machining technology, and the deburring of the deep hole intersection position is required, the valve 600 includes a first intersecting deep hole group 601, a second intersecting deep hole group 602, and the intersecting deep hole group 601 includes a first deep hole 6011, a second deep hole 6012. The structure is that the diameter D = 1.6mm of the micro inner flow channel, the total length of the flow channel $l$ = 100mm, and the length-diameter ratio $l$/D = 50, including a structure of straight line 603 and L-bend 604, the bending angle of L-bend 604 is 90°, for example, the first deep hole 6011 of the first intersecting deep hole group 601 and the second deep hole 6012 form L-shaped bend 604, and the bending radius of L-shaped bend is 0.2mm. The material is aluminum alloy. The specific polishing method includes following steps:

Step 1: Similar to the first embodiment and will not be repeated here. The viscosity of the liquid phase of the two-phase flow polishing medium is 90cP~120cP, the abrasive particle size $d$ = 40$\mu$m~42$\mu$m, and the optimal abrasive mass concentration is 20~22g/L.
Step 2: the specific characteristic parameters related to the inner flow channel of the hydraulic assembly, length $l$ = 100mm, diameter D = 1.5mm~2mm, length diameter ratio $l$/D = 50, initial average roughness $Ra_0$ = 0.8$\mu$m, the target value of the optimal roughness after polishing $Ra$ = 0.4$\mu$m and the burrs at the intersection holes can be fully removed under a 40x microscope, Reynolds number Re = 100, concave and convex 1grinding ratio k = 0.3, abrasive particle size $d$ = 40$\mu$m, the average cutting depth of the abrasive cutting edge $L$ = 3nm, that is, the unilateral thinning rate in the polishing process is about 11$\mu$m/h, the average contact length of the abrasive cutting edge is $b$ = 200nm, that is, the final limit scratch and the corresponding optimal roughness $Ra$ is 0.2$\mu$m, the water-based liquid phase density is $\rho_l$ = 1500Kg/m$^3$, the abrasive solid phase density is $\rho_p$ = 3300Kg/m$^3$, the yield limit of aluminum alloy material $\sigma_w$ = 100MPa, the initial time period $t$ = 30min, and the pressurization ratio $\chi$ = 125.

$$Ra = Ra_0 - [\frac{1}{12}L\pi d^3 \left(\frac{\rho_p}{\rho_l}\right)^{\frac{4}{3}} \cdot \frac{Re \cdot D^2 \cdot \chi \cdot P}{32l^2 \cdot \sigma_w} - \frac{b^2}{4d}] \cdot (1-k) \cdot \frac{t}{2}$$

Calculate and obtain a predetermined pressure P = 42MPa.
Step 3: The predetermined pressure P = 42MPa and the initial time period of 30min in the Step 2 are input into a device for test processing. After the test processing, a plug gauge test is carried out on the port diameter of the inner flow channel of the test workpiece, and the $\delta$ is the enlarged value of the port diameter, and it is found that the $\delta$ = 0.05mm, which reaches the target enlarged value $\delta$ = 0.047mm calculated according to the following formula according to $Ra$ = 0.4$\mu$m, indicating that the total time of the inner flow channel polishing processing is 0.5 hour to reach the target value $Ra$ = 0.4$\mu$m of the expected optimal roughness after the polishing.

$$Ra^* = Ra_0 - \delta \cdot \frac{(1-k)}{8}$$

Step 4: Enter the standard time period of 0.5 hour and the predetermined pressure P = 42MPa in the device for formal processing, and the device will automatically stop when the processing lasts for the standard time period.

Step 5: After the processing, suck out the polishing medium in the tank and clean the tank, and add 0.1μs/cm~10μs/cm clean deionized water to the tank as a cleaning medium. Set the pressure to P = 42MPa, turn on the device to apply the pressure to the deionized water to do cleaning, and when the deionized water discharged through the inner flow channel under spotlight irradiates a straight opalescent column, that is, the Tyndall effect, and the cleaning is completed.

Step 6: Ultrasonic cleaning of the parts for 10 minutes, air gun blow drying, and finally drying in the drying oven to complete the final cleaning.

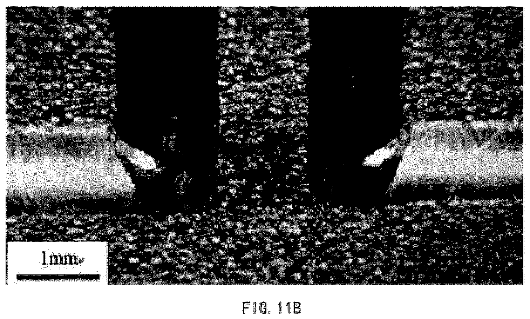

Use wire cutting to split the intersecting deep hole positions of the polished valve 600 with intersecting deep holes set along the axis of the flow channel, and further enlarge it to obtain what is shown in FIG. 11B, that a flattening surface close to the machining surface and the significant polishing result that can be clearly seen on the inner surface of the flow channel, and the surface is smooth and bright. and the burrs at the intersection of deep holes are fully removed under a 40x microscope. After roughness measuring, the optimal roughness Ra = 0.4μm meets the target requirement of Ra being less than or equal to 0.4μm.

Although the above embodiments of the present disclosure are disclosed as above, they are not used to limit the present disclosure. Therefore, any amendments, equivalent changes and modifications made to the above embodiments of the present disclosure without departing from the proposal of the present disclosure fall within the scope of protection defined in the claims of the present disclosure.

**Claims**

1. A surface polishing method for a micro inner flow channel, wherein diameter of the micro inner flow channel is less than or equal to 3mm and length-diameter ratio is greater than or equal to 50:1, and the polishing method comprising following steps:

   a polishing medium comprising a liquid phase and a solid phase, and viscosity of the liquid phase <1000cP, the solid phase comprises abrasive particles;
   a predetermined pressure being set on the polishing medium, making the polishing medium flow in the micro inner flow channel at a flow velocity more than 5m/s, and flow rate of the polishing medium flowing into the micro inner flow channel at one end reaches a saturation flow rate allowed by the bore of the micro inner flow channel, making the hydraulic pressure inside the inner flow channel be in a pressure holding state.

2. The polishing method of claim 1, wherein the liquid phase of the polishing medium is a water-based liquid.

3. The polishing method of claim 1, wherein the abrasive particle has a surface sharp angle structure, the average cutting depth of the abrasive particle tip is 1.4nm~14nm, and the average contact length of the abrasive particle tip is 50nm~1000nm.

4. The polishing method of claim 3, wherein the polishing medium polish the micro inner flow channel in a standard time period until the optimal surface roughness of the micro inner flow channel reaches a target value, and the standard time period is obtained through the following steps:

   the polishing medium polishes the micro inner flow channel in an initial time period, detects the optimal surface roughness of the micro inner flow channel, and if the optimal surface roughness reaches the target value, the initial time period is the standard time period; if the optimal surface roughness does not reach the target value, a stepping time period is increased successively until the optimal surface roughness reaches the target value, and the corresponding total time period is the standard time period;
   wherein, the initial time period and the stepping time period are obtained according to the unilateral thinning rate corresponding to the abrasive particles and the initial average surface roughness of the micro inner flow channel.

5. The polishing method of claim 3, wherein the predetermined pressure P satisfies the following formula:

$$Ra = Ra_0 - \left[\frac{1}{12}L\pi d^3\left(\frac{\rho_p}{\rho_l}\right)^{\frac{4}{3}} \cdot \frac{Re \cdot D^2 \cdot \chi \cdot P}{32l^2 \cdot \sigma_w} - \frac{b^2}{4d}\right] \cdot (1-k) \cdot \frac{t}{2}$$

$Ra_0$ is the initial average surface roughness of the micro inner flow channel, $Ra$ is the target value of the optimal surface roughness of the micro inner flow channel after polishing, $t$ is the initial time period, $L$ is the average cutting depth of the abrasive cutting edge, $b$ is the average contact length of the abrasive cutting tip, $\rho_l$ is the water-based liquid phase density, $\rho_p$ is the abrasive solid phase density, $\sigma_w$ is the yield limit of the workpiece material, $\chi$ is the pressurization ratio to reach the saturation flow, Re is the Reynolds number of the liquid phase, $l$ is the length of the micro inner flow channel, $D$ is the diameter of the micro inner flow channel, $d$ is the abrasive particle size, $k$ is the concave-convex grinding ratio coefficient.

6. The polishing method of claim 1, wherein it further comprises: after the micro inner flow channel is polished, the surface optimal roughness corresponding to enlarged value of a port of the micro inner flow channel satisfies the following formula:

$$Ra^* = Ra_0 - \delta \cdot \frac{(1-k)}{8}$$

$Ra^*$ is the optimal surface roughness of the port diameter after the micro inner flow channel is polished, $Ra_0$ is the initial average surface roughness of the micro inner flow channel, $\delta$ is the enlarged value of the port, and k is the concave-convex grinding ratio coefficient.

7. The polishing method of claim 1, wherein it further comprises:
after the surface roughness of the micro inner flow channel reaches the target value, a cleaning medium is injected into the micro inner flow channel with the predetermined pressure, and the cleaning medium and the liquid phase of the polishing medium dissolve each other, until a Tyndall effect appears on the cleaning medium flowing out of the micro inner flow channel.

8. The polishing method of claim 1, wherein it further comprises:
on the basis of a lower limit of viscosity of the liquid phase, abrasive particle size of the solid phase and abrasive mass concentration, the viscosity of the liquid phase of the polishing medium, the abrasive particle size of the solid phase and the mass concentration of the abrasive particles are gradually increased until the flow rate or flow velocity of the polishing medium of the two-phase flow is reduced by 1%~5% compared with the flow rate or flow velocity corresponding to the lower limit value, and an optimal value range of the viscosity, abrasive particle size and abrasive mass concentration is obtained.

9. The polishing method of claim 1, wherein the polishing medium polishes the micro inner flow channel in a standard time period, the flow rate or flow velocity of the polishing medium in the micro inner flow channel is judged, and if the flow rate or flow velocity reaches the specified value, the optimal surface roughness reaches the target value.

10. The polishing method of claim 1, wherein the micro inner flow channel comprises an S-shaped bend, an L-shaped bend, a U-shaped bend, an O-shaped bend, and a spiral bend bending structure in a three-dimensional spatial direction, and the liquid phase of the polishing medium comprises a polymer tackifier.

11. A micro inner flow channel part, wherein the micro inner flow channel part is obtained by the polishing method as described in any one of claims 1-10.

12. The micro inner flow channel part of claim 11, wherein it has a micro inner flow channel with a diameter less than or equal to 3mm, and a length-diameter ratio greater than or equal to 50:1, and the micro inner flow channel part is obtained through additive manufacturing, casting, laser processing, or electric spark machining, and the micro inner flow channel has an inner surface with an optimal surface roughness of $Ra$ less than or equal to 1.6μm after being polished.

13. The micro inner flow channel part of claim 11, wherein it has a micro inner flow channel with a diameter of less than or equal to 3mm, and a length-diameter ratio of 50:1 is large, and the micro inner flow channel part is obtained through a precision machining, and the micro inner flow channel has an inner surface with an optimal surface roughness *Ra* less than or equal to 0.4μm after being polished.

14. The micro inner flow channel part of claim 11, wherein the micro inner flow channel part is an additively manufactured aero-engine superalloy fuel nozzle, the fuel nozzle has the micro inner flow channel, the diameter of the micro inner flow channel is <2.5mm, the micro inner flow channel has a straight line, an L-shaped bend and an O-bend, and the surface optimal roughness *Ra* of the micro inner flow channel is less than or equal to 1.6μm; or

the micro inner flow channel part is an additive manufactured aluminum alloy heat exchanger, the heat exchanger has a micro inner flow channel, the diameter is <3mm, and the micro inner flow channel has a straight line, an L-shaped bend, an S-shaped bend and a U-shaped bend, and the surface optimal roughness *Ra* of the micro inner flow channel is less than or equal to 1.6μm; or
the micro inner flow channel part is an additive manufactured titanium alloy hydraulic assembly, the hydraulic assembly has a micro inner flow channel, the diameter is 3mm, and the micro inner flow channel has a straight line, an S-shaped bend, an L-shaped bend, and the surface optimal roughness Ra of the micro inner flow channel is less than or equal to 3.2μm; or
the micro inner flow channel part is an additive manufactured stainless steel throttle the throttle has a micro inner flow channel, the diameter is <1mm, the micro inner flow channel has a spiral bend, and the surface optimal roughness *Ra* of the micro inner flow channel is less than or equal to 0.8μm.

15. The micro inner flow channel part of claim 11, wherein the micro inner flow channel part is an aero-engine casting superalloy hollow blade, the hollow blade has an inner cavity structure that the micro inner flow channel is connected with a small hole, and the optimal roughness *Ra* of the inner surface of the small hole after polishing is less than or equal to 0.8μm, without a remelt layer, and the chamfer radius of the hole is greater than 0.1mm.

16. A polishing medium, and the polishing medium being used for claim 1, the polishing medium comprising a liquid phase and a solid phase, and the viscosity of the liquid phase <1000cP, the solid phase comprising an abrasive particle; and the liquid phase of the polishing medium is added with polymer tackifier; steps for obtaining the polishing medium comprising: on the basis of a lower limit of viscosity of the liquid phase, abrasive particle size of the solid phase and abrasive mass concentration, the viscosity of the liquid phase of the polishing medium, the abrasive particle size of the solid phase and the mass concentration of the abrasive particles are gradually increased until the flow rate or flow velocity of the polishing medium of the two-phase flow is reduced by 1%~5% compared with the flow rate or flow velocity corresponding to the lower limit value, and an optimal value range of the viscosity, abrasive particle size and abrasive mass concentration is obtained.

17. The polishing medium of claim 16, wherein a defoamer is added to the liquid phase, and in the process of processing the inner flow channel by the polishing method, the volume ratio of the surface foaming slurry of the polishing medium to the volume of the liquid phase does not exceed 0.3:1.

18. The polishing medium of claim 16, wherein a lubricant is added to the liquid phase of the polishing medium, and the lubricant comprises one or more combinations of inorganic compounds, elemental substances, and polymer compounds.

a polishing medium comprising a liquid phase and a solid phase, and viscosity of the liquid phase < 1000cP, the solid phase comprises abrasive particles

a predetermined pressure being set on the polishing medium, making the polishing medium flow in the micro inner flow channel at a flow velocity more than 5m/s, and flow rate of the polish polishing medium flowing into the micro inner flow channel at one end reaches a saturation flow rate allowed by the bore of the micro inner flow channel, making the hydraulic pressure inside the inner flow channel be in a pressure holding state

FIG. 1

Surface to be
processed

Surface already
been processed

FIG. 2

a polishing medium comprising a liquid phase and a solid phase, and viscosity of the liquid phase < 1000cP, the solid phase comprises abrasive particles

a predetermined pressure being set on the polishing medium, making the polishing medium flow in the micro inner flow channel at a flow velocity more than 5m/s, and flow rate of the polish polishing medium flowing into the micro inner flow channel at one end reaches a saturation flow rate allowed by the bore of the micro inner flow channel, making the hydraulic pressure inside the inner flow channel be in a pressure holding state

the polishing medium polishes the micro inner flow channel in an initial time period, detects the optimal surface roughness of the micro inner flow channel, and if the optimal surface roughness reaches the target value, the initial time period is the standard time period; if the optimal surface roughness does not reach the target value, a stepping time period is increased successively until the optimal surface roughness reaches the target value, and the corresponding total time period is the standard time period ; wherein, the initial time period and the stepping time period are obtained according to the unilateral thinning rate corresponding to the abrasive particles and the initial average surface roughness of the micro inner flow channel

the polishing medium polish the micro inner flow channel in a standard time period until the optimal surface roughness of the micro inner flow channel reaches a target value

FIG. 3

a polishing medium comprising a liquid phase and a solid phase, and viscosity of the liquid phase < 1000cP, the solid phase comprises abrasive particles

a predetermined pressure being set on the polishing medium, making the polishing medium flow in the micro inner flow channel at a flow velocity more than 5m/s, and flow rate of the polish polishing medium flowing into the micro inner flow channel at one end reaches a saturation flow rate allowed by the bore of the micro inner flow channel, making the hydraulic pressure inside the inner flow channel be in a pressure holding state

the polishing medium polish the micro inner flow channel in a standard time period until the optimal surface roughness of the micro inner flow channel reaches a target value

after the surface roughness of the micro inner flow channel reaches the target value, a cleaning medium is injected into the micro inner flow channel with the predetermined pressure, and the cleaning medium and the liquid phase of the polishing medium dissolve each other, until a Tyndall effect appears on the cleaning medium flowing out of the micro inner flow channel

FIG. 4

a polishing medium comprising a liquid phase and a solid phase, and viscosity of the liquid phase < 1000cP, the solid phase comprises abrasive particles

a predetermined pressure being set on the polishing medium, making the polishing medium flow in the micro inner flow channel at a flow velocity more than 5m/s, and flow rate of the polish polishing medium flowing into the micro inner flow channel at one end reaches a saturation flow rate allowed by the bore of the micro inner flow channel, making the hydraulic pressure inside the inner flow channel be in a pressure holding state

on the basis of a lower limit of viscosity of the liquid phase, abrasive particle size of the solid phase and abrasive mass concentration, the viscosity of the liquid phase of the polishing medium, the abrasive particle size of the solid phase and the mass concentration of the abrasive particles are gradually increased until the flow rate or flow velocity of the polishing medium of the two-phase flow is reduced by 1%~5% compared with the flow rate or flow velocity corresponding to the lower limit value, and an optimal value range of the viscosity, abrasive particle size and abrasive mass concentration is obtained

the polishing medium polish the micro inner flow channel in a standard time period until the optimal surface roughness of the micro inner flow channel reaches a target value

FIG. 5

FIG. 6A

FIG. 6B

FIG. 6C

200

201

2032

203

204

2031

202

202

FIG. 7A

FIG. 7B

FIG. 7C

FIG. 8A

FIG. 8B

FIG. 8C

400

401

X1

FIG. 9A

FIG. 9B

500

501

502

FIG. 10A

FIG. 10B

FIG. 11A

FIG. 11B

FIG. 12A

FIG. 12B

FIG. 13

<div align="center">**INTERNATIONAL SEARCH REPORT**</div>

| International application No. |
|---|
| **PCT/CN2023/098660** |

**A. CLASSIFICATION OF SUBJECT MATTER**

B24B1/00(2006.01)i；ㅤB24B31/116(2006.01)i；ㅤB24C11/00(2006.01)i；ㅤB24B31/14(2006.01)i

According to International Patent Classification (IPC) or to both national classification and IPC

**B. FIELDS SEARCHED**

Minimum documentation searched (classification system followed by classification symbols)

ㅤㅤIPC：ㅤB24B,B24C，ㅤB33Y,F28F,F02C,F01D

Documentation searched other than minimum documentation to the extent that such documents are included in the fields searched

Electronic data base consulted during the international search (name of data base and, where practicable, search terms used)

ㅤㅤCNTXT, ENTXT, VEN, CJFD, ENTXTC: 微, 细, 孔, 道, 光整, 流体, 抛光, 黏度, 粘度, 磨粒, micro, pore, aperture, finishing, grinding, fliud, viscosity, visco+, abrasive, grain?

**C. DOCUMENTS CONSIDERED TO BE RELEVANT**

| Category* | Citation of document, with indication, where appropriate, of the relevant passages | Relevant to claim No. |
|---|---|---|
| PX | CN 114734365 A (AECC SHANGHAI COMMERCIAL AIRCRAFT ENGINE MANUFACTURING CO., LTD. et al.) 12 July 2022 (2022-07-12) description, paragraphs 28-133, and figures 1-13 | 1-18 |
| PX | CN 114750063 A (AECC SHANGHAI COMMERCIAL AIRCRAFT ENGINE MANUFACTURING CO., LTD. et al.) 15 July 2022 (2022-07-15) description, paragraphs 7-81, and figures 1-4 | 1-4, 7, 9-18 |
| PX | CN 114734307 A (AECC SHANGHAI COMMERCIAL AIRCRAFT ENGINE MANUFACTURING CO., LTD. et al.) 12 July 2022 (2022-07-12) description, paragraphs 24-106, and figures 1-8 | 1-18 |
| X | CN 1347788 A (EXTRUDE HONE CORP.) 08 May 2002 (2002-05-08) description, p. 4, line 3 to p. 10, third-to-last line, and figures 1-18 | 1-3, 7, 9-15 |
| A | JP 2004034258 A (DENSO CORP.) 05 February 2004 (2004-02-05) entire document | 1-18 |
| A | JP 2008137092 A (ISUZU MOTORS LTD.) 19 June 2008 (2008-06-19) entire document | 1-18 |

☑ Further documents are listed in the continuation of Box C.ㅤㅤㅤㅤ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **20 September 2023** | **27 September 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/098660**

| C. | DOCUMENTS CONSIDERED TO BE RELEVANT | |
|---|---|---|
| Category* | Citation of document, with indication, where appropriate, of the relevant passages | Relevant to claim No. |
| A | US 5807163 A (DYNETICS CORP.) 15 September 1998 (1998-09-15)<br>entire document | 1-18 |

Form PCT/ISA/210 (second sheet) (July 2022)

INTERNATIONAL SEARCH REPORT
Information on patent family members

International application No.

**PCT/CN2023/098660**

| Patent document cited in search report | | | Publication date (day/month/year) | Patent family member(s) | | | Publication date (day/month/year) |
|---|---|---|---|---|---|---|---|
| CN | 114734365 | A | 12 July 2022 | None | | | |
| CN | 114750063 | A | 15 July 2022 | None | | | |
| CN | 114734307 | A | 12 July 2022 | None | | | |
| CN | 1347788 | A | 08 May 2002 | JP | 2002126994 | A | 08 May 2002 |
| | | | | JP | 4824227 | B2 | 30 November 2011 |
| | | | | AT | 529219 | T | 15 November 2011 |
| | | | | EP | 1186377 | A2 | 13 March 2002 |
| | | | | EP | 1186377 | A3 | 02 January 2004 |
| | | | | EP | 1186377 | B1 | 19 October 2011 |
| | | | | US | 2002028633 | A1 | 07 March 2002 |
| | | | | US | 6500050 | B2 | 31 December 2002 |
| JP | 2004034258 | A | 05 February 2004 | None | | | |
| JP | 2008137092 | A | 19 June 2008 | None | | | |
| US | 5807163 | A | 15 September 1998 | EP | 1300456 | A1 | 09 April 2003 |
| | | | | EP | 1300456 | B1 | 29 November 2006 |
| | | | | DE | 844920 | T1 | 05 April 2001 |
| | | | | WO | 9705989 | A1 | 20 February 1997 |
| | | | | DK | 0844920 | T3 | 04 August 2003 |
| | | | | AU | 6764296 | A | 05 March 1997 |
| | | | | JPH | 11510437 | A | 14 September 1999 |
| | | | | JP | 4262775 | B2 | 13 May 2009 |
| | | | | DE | 69627507 | D1 | 22 May 2003 |
| | | | | DE | 69627507 | T2 | 06 November 2003 |
| | | | | EP | 0844920 | A1 | 03 June 1998 |
| | | | | EP | 0844920 | A4 | 24 January 2001 |
| | | | | EP | 0844920 | B1 | 16 April 2003 |
| | | | | DE | 29624247 | U1 | 23 May 2001 |
| | | | | DE | 69636745 | D1 | 11 January 2007 |
| | | | | DE | 69636745 | T2 | 18 October 2007 |
| | | | | ES | 2196168 | T3 | 16 December 2003 |
| | | | | AT | 237430 | T | 15 May 2003 |
| | | | | AT | 346896 | T | 15 December 2006 |

Form PCT/ISA/210 (patent family annex) (July 2022)

# EP 4 537 978 A1

**REFERENCES CITED IN THE DESCRIPTION**

**Non-patent literature cited in the description**

- library materials:. **YANG SHUREN** ; **WANG ZHIMING** ; **HE GUANGYU et al.** Engineering fluid mechanics[M]. Petroleum Industry Press, 2006